(19) Europäisches Patentamt / European Patent Office / Office européen des brevets

(11) **EP 2 130 876 A1**

(12) **EUROPEAN PATENT APPLICATION**

(43) Date of publication:
**09.12.2009 Bulletin 2009/50**

(21) Application number: **09011987.6**

(22) Date of filing: **23.02.2005**

(51) Int Cl.:
*C09C 1/30* (2006.01)    *C09C 3/08* (2006.01)
*C09C 3/10* (2006.01)    *G03C 1/95* (2006.01)
*B41M 5/52* (2006.01)

(84) Designated Contracting States:
**DE FR GB**

(30) Priority: **24.02.2004 JP 2004047898**
**18.03.2004 JP 2004078683**

(62) Document number(s) of the earlier application(s) in accordance with Art. 76 EPC:
**05003878.5 / 1 571 181**

(71) Applicant: **FUJIFILM Corporation**
**Minato-ku**
**Tokyo (JP)**

(72) Inventors:
  • **Fujimoto, Shinji**
  **Minami-Ashigara-shi**
  **Kanagawa (JP)**

• **Kobayashi, Takashi**
**Minami-Ashigara-shi**
**Kanagawa (JP)**

(74) Representative: **HOFFMANN EITLE**
**Patent- und Rechtsanwälte**
**Arabellastrasse 4**
**81925 München (DE)**

Remarks:
This application was filed on 21-09-2009 as a divisional application to the application mentioned under INID code 62.

(54) **Inorganic fine particle dispersion and manufacturing method thereof as well as image-recording material**

(57) The present invention relates to a method for producing an inorganic fine particle dispersion including adding inorganic fine particles to an aqueous medium containing at least water, a polymer dispersant and a metal salt, and then executing a dispersion process.

EP 2 130 876 A1

**Description**

BACKGROUND OF THE INVENTION

Field of the Invention

The present invention relates to an inorganic fine particle dispersion that can be prepared with low energy, a method for producing such a dispersion, and an image-recording material that is desirably used for an ink-jet recording process in which liquid-state ink, such as aqueous or oil ink, and solid-state ink, which is a solid material at normal temperature and fused to a liquid state for use in recording, are applied, as well as for a recording process in which a colorant composition or colored toner is applied to a transfer recording process.

Description of the Related Art

In recent years, along with rapid developments in the information technology (IT) industry, various information-processing systems have been developed together with recording methods and recording apparatuses suitable for the respective information processing systems, and have been put to practical use. Recording methods which have been put to practical use include, for example, a silver-salt photographic method, an ink-jet recording method, an electrophotographic method, a heat-sensitive recording method, a sublimation transfer method, and a thermal transfer method.

Among the above-mentioned recording methods, for example, the ink-jet recording method has been widely used in office-use apparatuses as well as in so-called home-use apparatuses due to its capability of being recorded on various recording materials, comparatively inexpensive hardware (apparatuses), compactness, and superior quietness. In recent years, along with the development of high-resolution ink-jet printers and hardware (apparatuses), various ink-jet-recording-use media have also been developed so that so-called photograph-like high-quality recorded articles can be obtained.

An ink-jet recording medium having a porous structure in a layer for receiving the ink (hereinafter referred to as "ink-receiving layer") has been developed and commercialized in recent years. Such ink-jet recording medium, owing to the porous structure, displays excellent ink receptivity (rapid drying property) and high gloss.

An ink-jet recording medium is formed by applying a preparation solution (for example, a coating solution for forming an ink-receiving layer), prepared by dispersing inorganic fine particles such as silica fine particles in an aqueous medium, onto a support base material such as paper to be placed thereon. In this case, it is desirable for the inorganic fine particles to be maintained in a good dispersed state in the dispersion.

For example, there has been proposed ink-jet recording media in which an ink-receiving layer with high void ratio, which contain fine inorganic fine particles and a water-soluble resin, is formed on a support (refer to, for example, Japanese Patent Applications Laid-Open Nos. 10-119423 and 10-217601). Among these recording media, in particular, the ink-jet recording medium, which has an ink-receiving layer made of a porous structure using silica as inorganic fine particles, is superior in ink-absorbing property, exerts high ink-receiving property capable of forming an image with high resolution, and also provides high gloss.

As described above, for example, silica fine particles are one kind of preferable particles because of their high color density, superior color developing property and capability of providing high gloss, and with respect to the particle size thereof, the smaller the particle size, the better; however, the silica fine particles sometimes aggregate in an aqueous medium, and the aggregation causes an increase in viscosity of the solution, and in particular, as the particle size becomes smaller, the degree of increase in the viscosity becomes greater. Consequently, it takes a long time to uniformly disperse the particles in an aqueous medium due to influences from the increased viscosity, and high energy is required, resulting in a problem of inefficiency in production energy. Energy saving and cost reduction are hindered by such a problem. For example, there has been a drawback of requiring a prolonged dispersing operation with a dispersing machine such as a homogenizer, a ball mill or a DYNO-mill, thereby requiring much energy in the preparation of the dispersion of inorganic fine particles. Moreover, there are cases where problems arise in the coating process after the preparation, causing subsequent degradation in the coated surface state.

In general, the following properties are required of the ink-jet-recording-use medium: (1) quick-drying property (greater ink-absorbing rate), (2) the ink-dot diameter is appropriate and uniform (no bleeding), (3) good granularity, (4) the dot has high circularity, (5) high color density, (6) high chroma (no dullness), (7) good light-fastness, gas-resistant and water-resistant properties are obtained on an image-printing portion, (8) high degree of whiteness is achieved on the recording face, (9) the recording medium has good storage stability (no yellowing or bleeding of image is caused even after long-term storage), (10) good dimensional stability without deformation (minimal curling), and (11) good running property of hardware. Also in the application of a photographic glossy paper used for obtaining so-called photograph-like high-quality record, there are also required, in addition to the aforementioned properties, glossiness, glossiness of the print, surface smoothness, and a touch similar to a photographic paper used in a silver halide photographic print. In order to obtain so-called photograph-like images as the recorded articles, it is necessary to satisfy the above-mentioned properties so as to achieve image-recording processes for high-quality photograph-like images, and also to provide good image stability with less susceptibility to ink bleeding even after long-term storage of recorded images.

Here, such photograph-like images having high-image-quality with sharp, vivid color tones in images are also required in printing methods other than the ink-jet recording method in the same manner.

As described above, in recent years, various recording media capable of forming photograph-like high-quality images have been proposed; however, with respect to techniques for achieving low costs with reduced energy consumption in preparing processes for an inorganic fine particle dispersion relating to the producing process of a recording medium, such techniques have not been achieved and put to practical use. Moreover, in particular, the ink-jet recording medium is inadequate in forming photograph-like images, since prevention of ink bleeding over time (hereinafter, referred to as "bleeding over time") has not been achieved sufficiently.

SUMMARY OF THE INVENTION

The present invention has been made in view of the above circumstances, and provides a method for producing an inorganic fine particle dispersion that is capable of suppressing an increase in viscosity upon dispersion of inorganic fine particles and uniformly dispersing the inorganic fine particles with low energy consumption, an inorganic fine particle dispersion with low viscosity in which inorganic fine particles are uniformly dispersed, and an image-recording material (in particular, an ink-jet recording medium) that is easily manufactured, has a good surface state on an ink-receiving face, and is less susceptible to image changes such as bleeding over time.

The inventors of the invention have found that by preparing a time zone in which, upon adding a dispersant and inorganic fine particles to an aqueous medium, the ratio of added amount of the dispersant that is added before or after the addition of the inorganic fine particles or simultaneously with the addition of the inorganic fine particles, with respect to the inorganic fine particles, is maintained at a ratio below the ratio of contents of the dispersant to the inorganic fine particles that have been prepared as a dispersion solution, it becomes possible to suppress an increase in viscosity upon preparation, and also to improve the dispersing property while reducing energy consumption.

Moreover, the present inventors have found that an addition of a water-soluble or a hydrophobic metal salt into an aqueous medium in which the inorganic fine particles are dispersed improves the dispersion of the inorganic fine particles, thereby reducing the time required in the dispersion process for bringing the inorganic fine particle dispersion to a desired solution viscosity whereby the inorganic fine particle dispersion can be produced with less energy consumption. The invention has been devised based upon the above-mentioned findings.

A first aspect of the invention is to provide a method for producing an inorganic fine particle dispersion comprising adding inorganic fine particles and a dispersant to an aqueous medium under an addition condition in which a ratio $(Dt/It)$ of an added amount $Dt$ of the dispersant to an added amount $It$ of the inorganic fine particles is made smaller than a ratio $(D/I)$ of a final added amount $D$ of the dispersant to a final added amount $I$ of the inorganic fine particles.

A second aspect of the invention is to provide an inorganic fine particle dispersion, which is obtained by using the method for producing an inorganic fine particle dispersion in accordance with the first aspect of the invention.

A third aspect of the invention is to provide an image-recording material comprising a layer formed by applying, to a support, a coating solution prepared by using the inorganic fine particle dispersion of the second aspect of the invention.

A fourth aspect of the invention is to provide a method for producing an inorganic fine particle dispersion, comprising adding inorganic fine particles to an aqueous medium containing at least water, a polymer dispersant and a metal salt, and then executing a dispersion process.

A fifth aspect of the invention is to provide an inorganic fine particle dispersion, which is prepared by using the method for producing an inorganic fine particle dispersion of the fourth aspect of the invention.

A sixth aspect of the invention is to provide an ink-jet recording medium, comprising an ink-receiving layer formed by applying, to a support, a coating solution prepared by using the inorganic fine particle dispersion of the fifth aspect of the invention.

BRIEF DESCRIPTION OF THE DRAWINGS

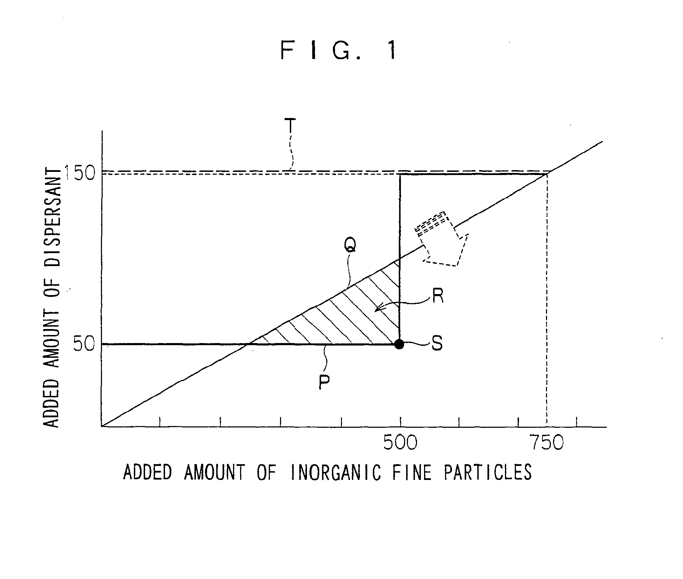

Fig. 1 is a correlation diagram that explains an adding condition by which the ratio $Dt/It$ of added amounts of a dispersant to inorganic fine particles upon dispersion is made smaller than the ratio $D/I$ of amounts of the dispersant to the inorganic fine particles to be finally added.

DETAILED DESCRIPTION OF THE INVENTION

The following description will discuss the present invention mainly as two divided portions, that is, a first producing method for an inorganic fine particle dispersion, a first inorganic fine particle dispersion and a first image recording material relating to such a method, and a second producing method for an inorganic fine particle dispersion, a second inorganic fine particle dispersion and a second ink-jet recording medium relating to such a method.

*First producing method for inorganic fine particle dispersion, inorganic fine particle dispersion and image-recording material*

The following description mainly discusses the first producing method for the inorganic fine particle dispersion of the invention and an ink-jet recording medium of the invention, in detail, and through the explanation, also discusses the first inorganic fine particle dispersion and image-recording materials other than the ink-jet recording medium, in detail.

(Inorganic fine particle dispersion and producing method thereof)

The first producing method for the inorganic fine particle dispersion of the invention includes a process of adding inorganic fine particles and a dispersant to an aqueous medium, whereby an inorganic fine particle dispersion is prepared. The adding process is carried out to include, prior to the completion of the preparation, a stage of adding under an adding condition in which the ratio (Dt/It) of an amount Dt of the dispersant to an amount It of the inorganic fine particles that are added is made smaller than a ratio (D/I) of a final added amount D (total amount) of the dispersant to a final added amount I (total amount) of the inorganic fine particles to be finally added up to the completion of the preparation.
For example, in the case when, in an inorganic fine particle dispersion that has been prepared, a ratio D/I of an amount of the dispersant (that is, a finally added amount D) to an amount of the inorganic fine particles (that is, a finally added amount I) is set to 1/1, the adding processes of the dispersant and the inorganic fine particles to the aqueous medium is carried out to include a stage in which the ratio (Dt/It) of an added amount Dt of the dispersant to an added amount It of the inorganic fine particles is made smaller than 1/1 (= 1), that is, the amount It of the inorganic fine particles is made greater than the amount Dt of the dispersant, between the start of the addition and the completion of the addition.
For example, referring to Fig. 1, the following description will discuss a case in which, in an inorganic fine particle dispersion that has been prepared, the final added amount D of the dispersant is 150 parts while the final added amount I of the inorganic fine particles is 750 parts, with the ratio D/I being set to 0.2. As shown by the thick solid line P in Fig. 1, a ratio (for example, ratio 0.1 at point S), which belongs to an area on the right side (arrow direction) of a straight line Q, is obtained. In other words, the dispersant and the inorganic fine particles are added to the aqueous medium with such an addition ratio that a triangular shaped region R is formed. Here, a long dashed line T in the Figure indicates a case in which the total amount of the dispersant has been added prior to the addition of the inorganic fine particles in the same manner as the conventional method.
The adding process of the dispersant and the inorganic fine particles to the aqueous medium may be carried out in either of a divided manner and a continuous manner, while having the above-mentioned ratio relationship from the start of the adding process, as long as the adding process includes a stage of adding which can satisfy the above-mentioned ratio. In particular, the adding process is preferably carried out in such a manner that, during the initial period to the middle period of the process at which the amount of addition It of the inorganic fine particles is maintained to less than 1/2 of the final added amount I, a shaded region R is formed as shown in Fig. 1. Although not particularly limited, the lower limit value of Dt/It is preferably maintained within a range so as to set the value of (Dt/It) / (D/I) to not less than 0.4.
By adding the dispersant and the inorganic fine particles in this manner, the amount of addition of the dispersant is particularly reduced in the initial period of preparation for preparing the inorganic fine particle dispersion so that it is possible to suppress an increase (viscosity increase) in the liquid viscosity; thus, it becomes possible to carry out the dispersing process uniformly with a low level of energy consumption, and to obtain an inorganic fine particle dispersion with low viscosity. When a preparation solution (in particular, a coating solution for forming an ink-receiving layer), which forms a recording layer used for recording an image (in particular, an ink-receiving layer that receives ink to form an image), is prepared by using this inorganic fine particle dispersion, and applied so as to finally form an image-recording layer (in particular, an ink-jet recording medium), it becomes possible to provide an image recording material (in particular, an ink-jet recording medium) with a recording layer (in particular, an ink-receiving layer) having superior surface properties.
The following description will discuss inorganic fine particles and a dispersant relating to the invention in detail.

- Inorganic fine particles -

With respect to the inorganic fine particles, examples thereof include: silica fine particles, colloidal silica, titanium dioxide, barium sulfate, calcium silicate, zeolite, kaolinite, halloysite, mica, talc, calcium carbonate, magnesium carbonate, calcium sulfate, pseudoboehmite, zinc oxide, zinc hydroxide, alumina, aluminum silicate, calcium silicate, magnesium silicate, zirconium oxide, zirconium hydroxide, cerium oxide, lanthanum oxide and yttrium oxide. Among these, in the case of forming a recording layer, in particular, an ink-receiving layer, as will be described later, silica fine particles, colloidal silica, alumina fine particles or pseudoboehmite are preferably used from the viewpoint of forming a desirable porous structure, and, in particular, silica fine particles are more preferably used.

In the case when, as will be described later, an ink-receiving layer for an ink-jet recording medium is formed by using the inorganic fine particle dispersion of the invention, a porous structure is prepared by allowing the layer to contain the inorganic fine particles so that the ink absorbing performance is improved. In particular, when the solid component content of the inorganic fine particles in the ink-receiving is set to not less than 50 % by mass, more preferably, to 60 % by mass or more, it is possible to form a desired porous structure, and consequently to provide an ink-jet recording medium with a sufficient ink-absorbing property. Here, the solid component content of the inorganic fine particles in the ink-receiving layer refers to a content that is calculated based upon components other than water in the composition forming the ink-receiving layer.

Since the silica fine particles especially have a great specific surface area, the ink-absorbing and holding properties are high when an ink-receiving layer for an ink-jet-recording medium has been formed as will be described later, and since its refractive index is low, the ink-receiving layer is allowed to have transparency when the fine particles are dispersed to an appropriate fine-particle size so that it is possible to provide a high color density and a superior color developing property. The transparency of the layer is important not only for the applications requiring transparency, such as OHPs, but also for the applications as recording sheets such as photographic glossy paper, from the viewpoint of obtaining a high color density, a superior color developing property and a high degree of gloss.

The average primary particle size of the inorganic fine particles is preferably set to not more than 20 nm, more preferably, to not more than 15 nm, most preferably, to not more than 10 nm. In the case when the average primary particle size is not more than 20 nm, the ink-absorbing property is effectively improved when an ink-receiving layer for an ink-jet recording medium is formed as will be described later, and the gloss on the surface of the ink-receiving layer is also improved.

In particular, the silica fine particles have a silanol group on the surface of each particle so that a hydrogen bond of the silanol group allows the particles to easily adhere to each other, and an adhering effect is exerted between the particles through the silanol group and a water-soluble resin; therefore, in the case when the average primary particle size is set to not more than 20 nm, the void ratio in the ink-receiving layer increases to form a structure having high transparency, making it possible to effectively improve the ink-absorbing property.

Based upon producing methods, the silica fine particles are normally classified into wet method particles and dry method (gas-phase method) particles. In the wet method, normally, active silica is generated through an acid decomposition of the silicate, and this is properly polymerized and aggregation-precipitated to obtain hydrous silica. In contrast, in the gas-phase method, normally, anhydrous silica is obtained through a method (flame hydrolysis method) in which halogenated silicon is subjected to a high-temperature gas-phase hydrolysis and a method (arc method) in which silica sand and cokes are heated and reduction-vaporized through arc in an electric furnace so that the resulting matter is oxidized with air to produce anhydrous silica; and "gas-phase silica" refers to anhydrous silica fine particles obtained through the gas-phase method. With respect to the silica fine particles of the invention, in particular, the gas-phase silica is preferably used.

The gas-phase silica particles, which are different from hydrous silica in the densities on the surface silanol group and the presence and absence of pores, exert different properties, and are suitably used for forming a three-dimensional structure with high void ratio. This is presumably explained as follows: the hydrous silica has a greater density of silanol groups on the fine particle surface, that is, 5 to 8 groups/$nm^2$, with the result that the silica fine particles tend to aggregate closely; in contrast, the gas-phase silica has a smaller density of silanol groups on the fine particle surface, that is, 2 to 3 groups/$nm^2$, with the result that the silica fine particles tend to roughly flocculate to form a structure having high void ratio.

The silica fine particles may be used in combination with inorganic fine particles other than the silica fine particles. In the case when the gas-phase silica is used in combination with the other fine particles, the content of the gas-phase silica in the entire inorganic fine particles is preferably set to not less than 30 % by mass, more preferably, to not less than 50 % by mass.

With respect to the inorganic fine particles, alumina fine particles and an alumina hydrate are used, and a mixture or a composite material of these may be preferably used. Among these, the alumina hydrate, which effectively absorbs ink and can fix the ink, is preferably used, and in particular, a pseudoboehmite ($Al_2O_3 \cdot nH_2O$) is more preferably used. Although the alumina hydrate may be used in various forms, a sol-state boehmite is preferably used since this easily provides a smooth layer.

With respect to the pore structure of the pseudoboehmite, the average pore radius is preferably set in a range from 1 to 30 nm, more preferably, from 2 to 15 nm. Moreover, the volume is preferably set in a range from 0.3 to 2.0 cc/g, more preferably, from 0.5 to 1.5 cc/g. Here, the pore radius and the pore volume are measured through a nitrogen adsorption-desorption method, and for example, a gas adsorption-desorption analyzer (for example, Omnisorp 369 (trade name), manufactured by Beckman Coulter Inc.) may be used for the measurements.

Here, among the alumina fine particles, gas-phase alumina fine particles are preferably used because of the greater specific surface area thereof. The average primary particle size of the gas-phase alumina fine particles is preferably set to not more than 30 nm, more preferably, to not more than 20 nm.

From the viewpoint of preparation of an ink-receiving layer coating solution which will be described later, although not particularly limited, the content of the inorganic fine particles in the inorganic fine particle dispersion is preferably set in a range from 5 to 25 % by mass, more preferably, from 8 to 20 % by mass, with respect to the total mass of the inorganic fine particle dispersion.

- Dispersant -

With respect to the inorganic fine particle dispersion of the invention, a dispersant is added thereto in order to desirably carry out the dispersing process of the inorganic fine particles. The dispersant, which also serves as a mordant, makes it possible to improve water resistance and resistance to bleeding over time of a recorded image, for example, when an ink-jet recording medium having an ink-receiving layer is manufactured as will be described later. In other words, the dispersant, contained in the ink-receiving layer, is allowed to interact with liquid-state ink having an anionic dye as a colorant to stabilize the colorant so that it becomes possible to improve water resistance and resistance to bleeding over time a recorded image.

The dispersant relating to the invention includes an organic dispersant and an inorganic dispersant. In particular, a cationic polymer (cationic high-molecular weight dispersant), which is an organic dispersant, is preferably used. With respect to the dispersant, an organic or inorganic dispersant may be used alone, or two of more kinds of these may be used in combination; alternatively, an organic dispersant and an inorganic dispersant may be used together.

With respect to the cationic high-molecular weight dispersant, a polymer dispersant having a primary to tertiary amino group or a quaternary ammonium group as a cationic group is generally used. Here, a cationic non-polymer dispersant may also be used.

With respect to the polymer dispersant, examples thereof include a homopolymer of a monomer (mordant monomer) having a primary to tertiary amino group and a salt thereof or a quaternary ammonium salt, and a copolymer or a condensation polymer between the mordant monomer and another monomer (non-mordant monomer). Moreover, these polymer dispersants may be used as either of states, that is, water-soluble polymers and water-dispersible latex particles.

With respect to the above-mentioned monomer (mordant monomer), examples thereof include:

quaternary compounds derived from methyl chlorides, ethyl chlorides, methyl bromides, ethyl bromides, methyl iodides or ethyl iodides, such as trimethyl-p-vinylbenzyl ammonium chloride, trimethyl-m-vinylbenzyl ammonium chloride, triethyl-p-vinylbenzyl ammonium chloride, triethyl-m-vinylbenzyl ammonium chloride, N,N-dimethyl-N-ethyl-N-p-vinylbenzyl ammonium chloride, N,N-diethyl-N-methyl-N-p-vinylbenzyl ammonium chloride, N,N-dimethyl-N-n-propyl-N-p-vinylbenzyl ammonium chloride, N,N-dimethyl-N-n-octyl-N-p-vinylbenzyl ammonium chloride, N,N-imethyl-N-benzyl-N-p-vinylbenzyl ammonium chloride, N,N-diethyl-N-benzyl-N-p-vinylbenzyl ammonium chloride, N,N-dimethyl-N-(4-methyl)benzyl-N-p-vinylbenzyl ammonium chloride, N,N-dimethyl-N-phenyl-N-p-vinylbenzyl ammonium chloride, trimethyl-p-vinylbenzyl ammonium bromide, trimethyl-m-vinylbenzyl ammonium bromide, trimethyl-p-vinylbenzyl ammonium sulfonate, trimethyl-m-vinylbenzyl ammonium sulfonate, trimethyl-p-vinylbenzyl ammonium acetate, trimethyl-m-vinylbenzyl ammonium acetate, N,N,N-triethyl-N-2-(4-vinylphenyl)ethyl ammonium chloride, N,N,N-triethyl-N-2-(3-vinylphenyl)ethyl ammonium chloride, N,N,N-diethyl-N-methyl-N-2-(4-vinylphenyl)ethyl ammonium chloride, N,N-diethyl-N-methyl-N-2-(4-vinylphenyl)ethyl ammonium acetate, N,N-imethylaminoethyl (metha)acrylate, N,N-diethylaminoethyl (metha)acrylate, N,N-dimethylaminopropyl (metha)acrylate, N,N-diethylaminopropyl (metha)acrylate, N,N-dimethylaminoethyl (metha)acryl amide, N,N-diethylaminoethyl (metha)acryl amide, N,N-dimethylaminopropyl (metha)acryl amide, N,N-diethylaminopropyl (metha)acryl amide, or sulfonates, alkyl sulfonates, acetates or alkyl carboxylates formed by substituting anions of those compounds, etc.

Specific examples include: monomethyl diallyl ammonium chloride, trimethyl-2-(methacryloyloxy)ethyl ammonium chloride, triethyl-2-(methacryloyloxy)ethyl ammonium chloride, trimethyl-2-(acryloyloxy)ethyl ammonium chloride, triethyl-2-(acryloyloxy)ethyl ammonium chloride, trimethyl-3-(methacryloyloxy)propyl ammonium chloride, triethyl-3-(methacryloyloxy)propyl ammonium chloride, trimethyl-2-(methacryloylamino)ethyl ammonium chloride, triethyl-2-(methacryloylamino)ethyl ammonium chloride, trimethyl-2-(acryloylamino)ethyl ammonium chloride, triethyl-2-(acryloylamino)ethyl ammonium chloride, trimethyl-3-(methacryloylamino)propyl ammonium chloride, triethyl-3-(methacryloylamino)propyl ammonium chloride, trimethyl-3-(acryloylamino)propyl ammonium chloride and triethyl-3-(acryloylamino)propyl ammonium chloride, N,N-dimethyl-N-ethyl-2-(methacryloyloxy)ethyl ammonium chloride, N,N-diethyl-N-methyl-2-(methacryloyloxy)ethyl ammonium chloride, N,N-dimethlvl-N-ethyl-3-(acryloylamino)propyl ammonium chloride, trimethyl-2-(methacryloyloxy)ethyl ammonium bromide, trimethyl-3-(acryloylamino)propyl ammonium bromide, trimethyl-2-(methacryloyloxy)ethyl ammonium sulfonate and trimethyl-3-(acryloylamino)propyl ammonium acetate.

In addition to these, with respect to copolymerizable monomers, materials, such as N-vinyl imidazole and N-vinyl-2-methyl imidazole, are listed.

The above-mentioned non-mordant monomer is a monomer which contains neither a basic portion nor a cationic portion such as a primary to tertiary amino group and its salt or a quaternary ammoniumsalt, and exerts no interaction with a dye in ink-jet ink, or exerts only little interaction therewith.

With respect to the non-mordant monomer, examples thereof include: (metha)acrylic acid alkyl esters; (metha) acrylic acid cycloalkyl esters such as cyclohexyl (metha)acrylate; (metha)acrylic acid aryl esters such as phenyl(metha) acrylate; aralkyl esters such as benzyl (metha)acrylate; aromatic vinyls such as styrene, vinyl toluene and α -methylstyrene; vinyl esters such as vinyl acetate, vinyl propionate, versatic acid vinyl; allyl esters such as allyl acetate; halogen-containing monomers such as vinylidene chloride and vinyl chloride; vinyl cyanide such as (metha)acrylonitrile; and olefins such as ethylene and propylene.

With respect to the above-mentioned (metha)acrylic acid alkyl esters, (metha)acrylic acid alkyl esters with an alkyl portion having 1 to 18 carbon atoms are preferably used, and examples thereof include methyl(metha)acrylate, ethyl(metha)acrylate, propyl(metha)acrylate, isopropyl(metha)acrylate, n-butyl(metha)acrylate, isobutyl(metha)acrylate, t-butyl(metha)acrylate, hexyl(metha)acrylate, octyl(metha)acrylate, 2-ethylhexyl(metha)acrylate, lauryl(metha)acrylate and stearyl(metha)acrylate.

Among these, methylacrylate, ethylacrylate, methylmethacrylate, ethylmethacrylate and hydroxyethylmethacrylate are preferably used. Each of the above-mentioned non-mordant monomers may be used alone, or two or more kinds of these may be used in combination.

With respect to the polymer dispersant, preferable examples include: polydiallyldimethyl ammonium chloride, polymethacryloyloxyethyl-β-hydroxyethyldimethyl ammonium chloride, polyethyleneimine, polyallylamine and modified compounds thereof, polyallylamine hydrochloride, polyamide-polyamine resin, cationized starch, dicyandiamide formalin condensate, dimethyl-2-hydroxypropyl ammonium salt polymer, polyamidine, polyvinyl amine, and cationized acrylic emulsions of acrylic silicon latexes disclosed in Japanese Patent Application Laid-Open No. 10-264511, Japanese Patent Application Laid-Open No. 2000-43409, Japanese Patent Application Laid-Open No. 2000-343811 and Japanese Patent Application Laid-Open No. 2002-120452 (Aquabrid Series, for example, ASi-781, ASi-784, ASi-578 and ASi-903 manufactured by Daicel Chemical Industries, Ltd.), and more preferable examples include: an acrylic cationic polymer, such as Chemistat 7005 (manufactured by Sanyo Chemical Industries, Ltd.), a dimethyldiallyl ammonium chloride homopolymer such as Shallol DC-902P (manufactured by Dai-ichi Kogyo Seiyaku Co., Ltd.) and a copolymer of a cationic monomer and a nonionic monomer disclosed in Japanese Patent Application Laid-Open No. 11-20306.

The molecular weight of the organic dispersant is preferably set in a range from 2000 to 300000 in mass average molecular weight, more preferably, in a range from 2000 to 50000. When the molecular weight is set in this range, the water resistance and resistance to bleeding over time are further improved. Here, when the molecular weight is too small, the water resistance and resistance to bleeding over time tend to deteriorate, and when the molecular weight is too large, the liquid viscosity tends to increase, resulting in degradation in workability and problems such as reduction in gloss of the coat film after having been dried.

With respect to the cationic high-molecular dispersant serving as an organic dispersant, an acryl-based cationic polymer and its derivative are preferably used, in particular, from the viewpoint of the inorganic fine-particle dispersion.

Moreover, in addition to the organic dispersant, an inorganic dispersant may be used, and with respect to the inorganic dispersant, a polyvalent water-soluble metal salt and a hydrophobic metal-salt compound may be used. The inorganic dispersant is preferably contained as a metal salt, which will be described later.

Specific examples of the inorganic dispersant include salts or complexes of metals selected from magnesium, aluminum, calcium, scandium, titanium, vanadium, manganese, iron, nickel, copper, zinc, gallium, germanium, strontium, yttrium, zirconium, molybdenum, indium, barium, lanthanum, cerium, praseodymium, neodymium, samarium, europium, gadolinium, dysprosium, erbium, ytterbium, hafnium, tungsten or bismuth.

Specific examples thereof include: calcium acetate, calcium chloride, calcium formate, calcium sulfate, barium acetate, barium sulfate, barium phosphate, manganese chloride, manganese acetate, manganese formate dehydrate, manganese ammonium sulfate hexahydrate, cupric chloride, ammonium chloride copper (II) dihydrate, copper sulfate, cobalt chloride, cobalt thiocyanate, cobalt sulfate, nickel sulfate hexahydrate, nickel chloride hexahydrate, nickel acetate tetrahydrate, nickel sulfate ammonium hexahydrate, amide nickel sulfate hexahydrate, aluminum sulfate, aluminum alum, basic polyaluminum hydroxide, aluminum sulfite, aluminum thiosulfate, polyaluminum chloride, aluminum nitrate nonahydrate, aluminum chloride hexahydrate, ferrous bromide, ferrous chloride, ferric chloride, ferrous sulfate, ferric sulfate, zinc phenolic sulfonate, zinc bromide, zinc chloride, zinc nitrate hexahydrate, zinc sulfate, titanium tetrachloride, tetraisopropyl titanate, titanium acetylacetonate, titanium lactate, zirconium acetylacetonate, zirconyl acetate, zirconyl sulfate, zirconium ammonium carbonate, zirconyl stearate, zirconyl octylate, zirconyl nitrate, zirconium oxychloride, zirconium hydroxychloride, chromium acetate, chromium sulfate, magnesium sulfate, magnesium chloride hexahydrate, magnesium citrate nanohydrate, sodium phosphor tungstate, sodium tungsten citrate, 12 tungust phosphate n-hydrate, 12 tungust silicate 26 hydrate, molybdenum chloride, 12 molybdo phosphate n-hydrate, gallium nitrate, germanium nitrate, strontium nitrate, yttrium acetate, yttrium chloride, yttrium nitrate, indium nitrate, lanthanum nitrate, lanthanum chloride, lanthanum acetate, lanthanum benzoate, cerium chloride, cerium sulfate, cerium octylate, praseodymium nitrate, neodymium nitrate, samarium nitrate, europium nitrate, gadolinium nitrate, dysprosium nitrate, erbium nitrate, ytterbium nitrate, hafnium chloride and bismuth nitrate.

With respect to the inorganic dispersant, preferable examples thereof include an aluminum-containing compound, a titanium-containing compound, a zirconium-containing compound and a metal compound (salt or complex) of group IIIB of Periodic Table.

The amount of the dispersant in the inorganic fine particle dispersion is preferably set in a range from 3 to 15 % by mass in solid component, more preferably, in a range from 5 to 10 % by mass, with respect to the mass of the above-mentioned inorganic fine particles. In the case when an ink receiving layer for an ink-jet recording medium is formed as will be described later, the amount of the dispersant in the ink receiving layer is preferably set in a range from 0.01 to 5 $g/m^2$, more preferably, in a range from 0.1 to 3 $g/m^2$.

In addition to the dispersant and inorganic fine particles, a hardening agent, a water-soluble metal salt and other components, if necessary, may be added to the inorganic fine particle dispersion. The following description will discuss these components.

-Hardening agent-

In addition to the inorganic fine particles and dispersant, a hardening agent (cross-linking agent) may be added to the inorganic fine particle dispersion. In the case when an ink-jet recording medium having an ink-receiving layer is manufactured, for example, as will be described later, the ink receiving layer preferably contains the hardening agent; thus, the coated layer, which contains the inorganic fine particles and the dispersant together with a water-soluble resin, is allowed to contain the hardening agent that causes crosslinking in the water-soluble resin so that a porous layer, which has been cured by the crosslinking reaction between the hardening agent and the water-soluble resin, is formed.

With respect to the hardening agent of the invention, a boron compound is proposed as one of the preferable agents. With respect to the boron compound, examples thereof include: borax, boric acid, borates (for example, ortho-borates, such as $InBO_2$, $ScBO_3$, $YBO_3$, $LaBO_3$, $Mg_3(BO_3)_2$ and $CO_3(BO_3)_2$), diborates (for example, $Mg_2B_2O_5$ and $Co_2B_2O_5$), metha-borates (for example, $LiBO_2$, $Ca(BO_2)_2$, $NaBO_2$, and $KBO_2$), tetraborates (for example, $Na_2B_4O_7 \cdot 10H_2O$) and pentaborates (for example $KB_5O_8 \cdot 4H_2O$, $Ca_2B_6O_{11} \cdot 7H_2O$ and $CsB_5O_5$). Among these, from the viewpoint of starting a cross-linking reaction quickly, borax, boric acid and borates are preferably used, and, in particular, boric acid is more preferably used.

Besides the boron compound, the following compounds may also be used. For example, aldehyde-based compounds, such as formaldehyde, glyoxal and glutar aldehyde; ketone-based compounds, such as diacetyl and cyclopentane dion; active halogen compounds, such as bis(2-chloroethyl urea)-2-hydroxy-4,6-dichloro-1,3,5-triazine, 2,4-dichloro-6-S-triazine sodium salt; active vinyl compounds such as divinyl sulfonate, 1,3-vinylsulfonyl-2-propanol, N,N'-ethylene bis(vinylsulfonyl acetamide) and 1,3,5-triacryloyl-hexahydro-S-triazine; N-methylol compounds, such as dimethylol urea and methylol dimethyl hydantoin; melamine resins (for example, methylol melamine and alkylated methylol melamine); epoxy resins;

isocyanate-based compounds such as 1,6-hexamethylene diisocyanate; aziridine-based compounds described in U.S. Patents Nos. 3017280 and 2983611; carboxyimide-based compounds described in U.S. Patent No. 3100704; epoxy-based compounds such as glycerol triglycidyl ether; ethylene-imino-based compounds such as 1,6-hexamethylene-N, N'-bisethylene urea; halogenated carboxyaldehyde-based compounds such as mucochloric acid and mucophenoxy chloric acid; dioxane-based compounds such as 2,3-dihydroxy dioxane; metal-containing compounds such as titanium lactate, aluminum sulfate, chrome alum, potassium alum, zirconyl acetate, chromium acetate; polyamine compounds such as tetraethylene pentamine; hydrazide compounds such as dihydrazide adipate; and low-molecular weight compounds or polymers containing two or more oxazoline groups.

These hardening agents may be used alone or in combination of two or more kinds.

In the case when the ink receiving layer is formed, the hardening (crosslink-hardening) process of the layer is preferably carried out in the following manner: a coating solution (first solution) containing a hardening agent, inorganic fine particles, a dispersant and a water-soluble resin is prepared, and (1) simultaneously as the coating solution is applied to form a coated layer, or (2) during drying of a coated layer formed by applying the coating solution and before the coated layer exhibits a decreasing rate of drying, a basic solution (second solution) having a pH value of not less than pH 7.1 is applied to the coated layer.

Upon adding the hardening agent, the amount of the agent is preferably set in a range from 1 to 50 % by mass, more preferably, in a range from 5 to 40 % by mass, with respect to a water-soluble resin which will be described later.

- Metal salt -

In addition to the above-mentioned inorganic fine particles, the dispersant and the hardening agent, a metal salt (preferably, a water-soluble metal salt) may be preferably added to the inorganic fine particle dispersion of the invention. This metal salt can improve the dispersing property of the inorganic fine particles, and also effectively prevents bleeding over time of a recorded image through the function of metal cation of the metal salt when an ink-jet recording medium having an ink receiving layer is manufactured, for example, as will be described later. Thus, this arrangement makes it possible to achieve low energy consumption upon producing and low costs, and also to provide an ink-jet recording medium having an image-recording property capable of forming images like photographs.

The above-mentioned metal salt includes both of a water-soluble metal salt and a hydrophobic metal salt. Specific examples of the metal salt include the same compounds as the aforementioned specific examples described as the inorganic dispersant.

The content of the metal salt is preferably set in the following range. In other words, the content of the metal salt in the dispersion of inorganic fine particles is preferably set in a range from 0.1 to 20 % by mass, more preferably, in a range from 1 to 10 % by mass, with respect to the mass of the inorganic fine particles. When the content is set in the above-mentioned range, it is possible to effectively suppress an increase in viscosity upon dispersion of the inorganic fine particles, and consequently to reduce energy consumption upon preparation; thus, it becomes possible to obtain a dispersion of inorganic fine particles with low viscosity.

Here, "water solubility" in the water-soluble metal salt refers to the fact that not less than 1 % by mass of the salt can be dissolved in water at 20°C, and "hydrophobicity" in the hydrophobic metal salt refers to the fact that the solubility corresponding to the above-mentioned "water solubility" is not available.

With respect to the metal salt, a water-soluble metal salt is preferably used, and a zirconium compound is more preferably used. With respect to the water soluble compound containing zirconium, examples thereof include zirconium acetylacetonate, zirconyl acetate, zirconyl sulfate, zirconyl ammonium carbonate, zirconyl stearate, zirconyl actylate, zirconyl nitrate, zirconium oxychloride, zirconium hydroxichloride.

As described earlier, the metal salt has a function for serving as a mordant when it is contained in an aqueous medium.

Besides the above-mentioned components, other components, which will be described later, for example, various additives, such as an ultraviolet-ray absorbing agent and a surfactant, may be further added thereto.

The inorganic fine particle dispersion of the invention, which is prepared by using the above-mentioned producing method for an inorganic fine particle dispersion of the invention, contains a dispersant and inorganic fine particles that are added to an aqueous medium, preferably further contains a hardening agent and a metal salt, and is prepared by using other components, if necessary.

With respect to the preferable mode and use of the inorganic fine particle dispersion of the invention, not particularly limited, it is desirably used for various image-recording materials in which high-quality images having weather resistance, smoothness on the recording face, clearness in contour and high resolution (sharpness) are required, and specific applications, which require dispersion of inorganic fine particles, include, in addition to an ink-jet recording medium, which will be described more specifically, various recording materials, such as an image-receiving material for used in electrophotography, a heat-sensitive color-developing recording material, a sublimation transfer image-receiving material, a heat-transfer image-receiving material, a silver-salt photographic photosensitive material and printing paper.

(Image-recording materials)

An image-recording material of the invention includes a support and a recording layer formed on the support by using the inorganic fine particle dispersion of the invention, and may further include other layers in accordance with the image-recording material to be manufactured. With respect to the recording layer, at least one layer thereof is formed on the support directly or through another layer, by taking into consideration the components required for the image-recording material to be manufactured.

The image-recording materials of the invention includes various recording materials, such as an ink-jet recording medium, an image-receiving material for use in electrophotography, a heat-sensitive color-developing recording material, a sublimation transfer image-receiving material, a heat-transfer image-receiving material and a silver-salt photographic photosensitive material.

Among the image-recording materials, for example, the following description will discuss the ink-jet recording medium, more specifically.

The ink-jet recording medium can be constituted by a support and at least one ink-receiving recording layer (hereinafter, referred to as "ink-receiving layer") formed on the support, and may include other layers, if necessary. The ink-receiving layer is formed by, for example, applying a coating solution for forming an ink-receiving layer prepared by using the inorganic fine particle dispersion of the invention (hereinafter, referred to as "ink-receiving layer coating solution") on the support directly or through another layer.

As described earlier, the ink-receiving layer includes inorganic fine particles and a dispersant, and if necessary, may further includes a water-soluble resin together with a hardening agent and/or a metal salt. Moreover, other components may be added thereto, if necessary.

- Water-soluble resin -

With respect to the water-soluble resin, examples thereof include resins having a hydroxyl group as a hydrophilic structural unit, such as polyvinyl alcohol resins (polyvinyl alcohol (PVA), acetoacetyl modified polyvinyl alcohol, cation modified polyvinyl alcohol, anion modified polyvinyl alcohol, silanol modified polyvinyl alcohol, polyvinyl acetal, etc.), cellulose-based resins (methyl cellulose (MC), ethyl cellulose (EC), hydroxyethyl cellulose (HEC), carboxymethyl cellulose (CMC), hydroxyethylmethyl cellulose, hydroxypropylmethyl cellulose, etc.), chitins, chitosans, starch, resins having an ether bond (polyethylene oxide (PEO), polypropylene oxide (PPO), polyethylene glycol (PEG), polyvinyl ether (PVE), etc.] and resins having a carbamoyl group [polyacrylamide (PAAM), polyvinyl pyrrolidone (PVP), polyacrylic acid hydrazide, etc.). In addition, polyacrylate having a carboxyl group as a dissociation group, maleic acid resins, alginate, gelatins and the like may be used.

Among these, polyvinyl alcohol resins are preferably used.

From the viewpoint of prevention of cracks, the number-average polymerization degree of the polyvinyl alcohol resin (in particular, PVA) is preferably set to not less than 1800, more preferably, to not less than 2000. When the polyvinyl alcohol resin is used in combination with silica fine particles, the kind of the water-soluble resin becomes more important from the viewpoint of transparency. In particular, when anhydrous silica is used, PVA is preferably used as the water-soluble resin, and more specifically, PVA having a degree of saponification in a range from 70 to 99 % is preferably adopted.

In addition to polyvinyl alcohols (PVA), the polyvinyl alcohol resins include cation modified PVA, anion modified PVA, silanol modified PVA and other polyvinyl alcohol derivatives. These polyvinyl alcohols may be used alone or in combination of two or more kinds.

The polyvinyl alcohol resins have a hydroxyl group in its constituent unit, and since this hydroxyl group forms a hydrogen bond with a silanol group on the surface of the silica fine particle, it becomes easier to form a three-dimensional net-structure with the secondary particle of the silica fine particles serving as a net-chain unit. The formation of the three-dimensional net-structure makes it possible to form an ink receiving layer having a porous structure that has sufficient strength with a high void ratio. In the ink-jet recording process, the ink-receiving layer having the porous structure obtained as described above absorbs ink quickly through the capillary action, and makes it possible to form good dots of the perfect circle that are less susceptible to ink bleeding.

The content of the water-soluble resin in the ink-receiving layer is preferably set in a range from 9 to 40 % by mass, more preferably, in a range from 12 to 33 % by mass, with respect to the total solid components (mass) of the ink-receiving layer, from the viewpoints of preventing a reduction in the film strength and cracks upon drying due to the insufficient content and of preventing clogging of voids with resin due to the excessive content and the subsequent degradation in the ink absorbing property due to the reduction in the void ratio.

With respect to the inorganic fine particles and the water-soluble resin that are the main components of the ink-receiving layer, each of these may be a single material, or may be a mixed system of two or more materials.

- Ratio of contents between inorganic fine particles and water-soluble resin -

The ratio of mass contents between the inorganic fine particles (x) and the water-soluble resin (y) (PB ratio (x/y)) gives great influences to the film structure and film strength of the ink-receiving layer. In other words, when the PB ratio (x/y) becomes greater, the void ratio, pore volume and specific surface area (per unit mass) become greater; however, the density and strength tend to be lowered. More specifically, the PB ratio (x/y) in the ink-receiving layer relating to the invention is preferably set in a range from 1.5 to 10, from the viewpoints of preventing a reduction in the film strength and cracks upon drying due to the excessive PB ratio and of preventing clogging of voids with resin due to the insufficient PB ratio and the subsequent degradation in the ink absorbing property due to the reduction in the void ratio.

The ink-jet recording medium is susceptible to a stress when it passes through the transport system in an ink-jet printer; therefore, it is necessary for the ink-receiving layer to have sufficient film strength, and it is also necessary for the ink-receiving layer to have sufficient film strength from the viewpoint of preventing cracks and peeling in the ink-receiving layer upon cutting the recording medium into a sheet shape. From these viewpoints, the PB ratio is preferably set to not more than 5, and from the viewpoint of maintaining a high-speed ink absorbing property for the ink-jet printer, it is preferably set to not less than 2.

For example, in the case when a coating solution, prepared by completely dispersing gas-phase silica fine particles having an average primary particle size of not more than 20 nm and a water-soluble resin at a PB ratio (x/y) in a range from 2 to 5 in an aqueous solution, is applied to the support and dried, a three-dimensional net-structure with the secondary particle of silica fine particles serving as the net chain is formed so that it is possible to easily form a porous film having a light-transmitting property, which has an average pore size of not more than 25 nm, a void ratio in a range from 50 to 80 %, a pore specific volume of not less than 0.5 ml/g and a specific surface area of not less than 100 m$^2$/g.

-Other components-

The ink-jet recording medium (for example, ink-receiving layer) may further contains various known additives on demand, for example, a fading preventive agent such as an ultraviolet-ray absorbing agent and an antioxidant, a fluorescent whitening agent, a monomer, a polymerization initiator, a polymerization inhibitor, a bleeding preventive agent, an antiseptic agent, a viscosity-stabilizing agent, an antifoamer, a surfactant, an antistatic agent, a matting agent, a curling preventive agent, a water resistant agent and a water-soluble organic solvent.

With respect to the ultraviolet-ray absorbing agent, examples thereof include: cinnamic acid derivatives, benzophenon derivatives, benzotriazolyl phenol derivatives. For example, α -cyanophenyl butylcinnamate, o-benzotriazole phenol, o-benzotriazole-p-chlorophenol, o-benzotriazole-2,4-di-t-butyl phenol and o-benzotriazole-2,4-di-t-octyl phenol may be used. Hindered phenolic compounds may also be used as the ultraviolet-ray absorbing agent, and more specifically, those phenolic derivatives in which at least not less than one position of the second or sixth position is substituted by a branched alkyl group are preferably used.

Moreover, benzotriazole ultraviolet-ray absorbing agents, salicylic acid-based ultraviolet-ray absorbing agents, cyanoacrylate-based ultraviolet-ray absorbing agents and oxalic acid anilide-based ultraviolet-ray absorbing agents may also be used. Examples thereof are described in Japanese Patent Applications Laid-Open (JP-A) Nos. 47-10537, 58-111942, 58-212844, 59-19945, 59-46646, 59-109055 and 63-53544, Japanese Patent Application Publications (JP-B) Nos. 36-10466, 42-26187, 48-30492, 48-31255, 48-41572, 48-54965 and 50-10726; specifications in U.S. Patents Nos. 2,719,086, 3,707,375, 3,754,919 and 4,220,711, and the like.

The fluorescent whitening agent may also used as the ultraviolet-ray absorbing agent, and for example, coummarin-based fluorescent whitening agents may be used. Specific examples thereof are described in Japanese Patent Application Publications Nos. 45-4699 and 54-5324.

With respect to the anti-oxidant, examples thereof are described in European Patent Applications Laid-Open Nos. 223739, 309401, 309402, 310551, 310552 and 459416; German Patent Application Laid-Open No. 3435443; Japanese Patent Applications Laid-Open Nos. 54-48535, 60-107384, 60-107383, 60-125470, 60-125471, 60-125472, 60-287485, 60-287486, 60-287487, 60-287488, 61-160287, 61-185483, 61-211079, 62-146678, 62-146680, 62-146679, 62-282885, 62-262047, 63-051174, 63-89877, 63-88380, 66-88381, 63-113536, 63-163351, 63-203372, 63-224989, 63-251282, 63-267594, 63-182484, 1-239282, 2-26265, 2-71262, 3-121449, 4-291685, 4-291684, 5-61166, 5-119449, 5-188687, 5-188686, 5-110490, 5-1108437 and 5-170361; Japanese Patent Application Publications Nos. 48-43295 and 48-33212; U.S. Patents Nos. 4814262 and 4980275, and the like.

Specific examples thereof include: 6-ethoxy-1-phenyl-2,2,4-trimethyl-1,2-dihydroquinoline, 6-ethoxy-1-octyl-2,2,4-trimethyl-1,2-dihydroquinoline, 6-ethoxy-1-phenyl-2,2,4-trimethyl-1,2,3,4-tetrahydroquinoline, 6-ethoxy-1-octyl-2,2,4-trimethyl-1,2,3,4-tetrahydroquinoline, nickel cyclohexanate, 2,2-bis(4-hydroxyphenyl) propane, 1,1-bis(4-hydroxyphenyl)-2-ethylhexane, 2-methyl-4-methoxy-diphenyl amine and 1-methyl-2-phenylindole.

With respect to the fading preventive agent such as an ultraviolet-ray absorbing agent and an antioxidant, one kind thereof may be used alone, or two or more kinds thereof may be used in combination. The fading preventive agent may be made water-soluble, dispersed, formed into an emulsion, or used in an enclosed state in microcapsules. The added amount of the fading preventive agent is preferably set in a range from 0.01 to 10 % by mass with respect to the mass of the ink-receiving layer coating solution.

The ink-receiving layer is preferably allowed to contain a high-boiling-point organic solvent in order to prevent curling. With respect to the high-boiling-point organic solvent, those having a water-soluble property are preferably used, and examples of the water-soluble high-boiling-point organic solvent include alcohols, such as ethylene glycol, propylene glycol, diethylene glycol, triethylene glycol, glycerin, diethylene glycol monobutyl ether (DEGMBE), triethylene glycol monobutyl ether, glycerin monomethyl ether, 1,2,3-butanetriol, 1,2,4-butanetriol, 1,2,4-pentanetriol, 1,2,6-hexanetriol, thiodiglycol, triethanol amine and polyethylene glycol (having a weight-average-molecular weight of not more than 400). More preferably, diethylene glycol monobutyl ether (DEGMBE) is used.

The content of the high-boiling-point organic solvent in the ink-receiving layer coating solution is preferably set in a range from 0.05 to 1 % by mass, more preferably, from 0.1 to 0.6 % by mass.

Moreover, it may contain an acid, an alkali or the like as a pH-adjusting agent. In order to suppress frictional electrostatic charge and peeling electrostatic charge on the surface, metal oxide fine particles having an electronic conductivity may be contained therein, and in order to reduce the frictional property of the surface, various kinds of matting agents may be contained therein.

With respect to the ink-receiving layer coating solution, a surfactant is preferably contained therein. With respect to the surfactant, any one of cationic, anionic, nonionic, amphoteric, fluorine-based and silicone-based surfactants may be used.

With respect to the nonionic surfactant, examples thereof include: polyoxyalkylene alkyl ethers and polyoxyalkylene alkyl phenyl ethers (for example, diethylene glycol monoethyl ether, diethylene glycol diethyl ether, polyoxyethylene lauryl ether, polyoxyethylene stearyl ether and polyoxyethylene nonylphenyl ether); oxyethylene-oxypropylene block copolymers and sorbitan fatty acid esters (for example, sorbitan monolaurate, sorbitan monoolate and sorbitan triolate); polyoxyethylene sorbitan fatty acid esters (for example, polyoxyethylene sorbitan monolaurate, polyoxyethylene sorbitan monoolate and polyoxyethylene sorbitan triolate); polyoxyethylene sorbitol fatty acid esters (for example, tetraoleic acid polyoxyethylene sorbit); glycerin fatty acid esters (for example, glycerol monoolate); polyoxyethylene glycerin fatty acid esters (for example, monostearic acid polyoxyethylene glycerin and monooleic acid polyoxyethylene glycerin); polyoxyethylene fatty acid esters (for example, polyethylene glycol monolaurate and polyethylene glycol monoolate); and polyoxyethylene alkyl amines and acetylene glycols (for example, 2,4,7,9-tetramethyl-5-decyn-4,7-diol and ethylene oxide adducts and propyleneoxide adducts of the diol). Among these, polyoxyalkylenealkyl ethers are preferably used. The nonionic surfactant may be contained in any one of the ink-receiving layer coating solution (first solution) and the basic solution (second solution), and one kind thereof may be used alone, or two or more kinds of these may be used in combination.

With respect to the amphoteric surfactant, amino acid-type, carboxy ammonium betaine-type, sulfone ammonium betaine-type, ammonium sulfate betaine-type and imidazolium betaine-type surfactants are proposed, and for example, those surfactants, described in the specification of U.S. Patents No. 3,843,368, Japanese Patent Application Laid-Open Nos. 59-49535, 63-236546, 5-303205, 8-262742, and 10-282619, are preferably used. Among these amphoteric surfactants, amino acid-type amphoteric surfactants are preferably used, and with respect to the amino acid-type amphoteric surfactant, for example, as described in Japanese Patent Application Laid-Open No. 5-303205, N-amino acyl acid and salts thereof, which are formed into derivatives from amino acids (glycine, glutamic acid, histidine, etc.) and to which a long-chain acyl group is introduced, are used. These may be used alone or in combination of two or more kinds.

With respect to the anionic surfactant, examples thereof include: fatty acid salts (for example, sodium stearate and potassium oleate), alkyl sulfates (for example, sodium lauryl sulfate, lauryl triethanol sulfate amine), sulfonates (for example, sodium dodecylbenzene sulfonate), alkyl sulfosaccinates (for example, sodium dioctyl sulfosuccinate), alkyl diphenyl ether disulfonates, and alkyl phosphates.

With respect to the cationic surfactant, examples thereof include: alkyl amine salts, quaternary ammonium salts, pyridinium salts and imidazolium salts.

With respect to the fluorine-based surfactant, compounds obtained through intermediates having a perfluoroalkyl group using a method such as electrolytic fluoridation, telomerization and oligomerization are proposed. Examples thereof include perfluoroalkyl sulfonates, perfluoroalkyl carboxylates, perfluoroalkyl ethylene oxide adducts, perfluoroalkyl trialkyl ammonium salts, oligomers containing a perfluoroalkyl group and perfluoroalkyl phosphates.

With respect to the silicone-based surfactant, silicone oils modified by an organic group are preferably used, and these may have structures in which a side chain of a siloxane structure is modified by an organic group, in which two terminals thereof are modified and in which one terminal thereof is modified. The organic group-modified compounds include amino-modified, polyether-modified, epoxy-modified, carboxyl-modified, carbinol-modified, alkyl-modified, aralkyl-modified, phenol-modified and fluorine-inodified compounds.

The content of the surfactant in the ink-receiving layer coating solution is preferably set in a range from 0.001 to 2.0 %, more preferably, from 0.01 to 1.0 %. In the case when the coating process is carried out by using two or more solutions as the ink-receiving layer coating solution, the surfactant is preferably added to each of the coating solutions.

Moreover, in order to improve the coating-solution stability and handling property with a reduction in the liquid viscosity, the ink-receiving layer coating solution preferably contains a water-soluble organic solvent. With respect to the water-soluble organic solvent, those having a volatile property are preferably used, and by using these together with the aforementioned high-boiling-point organic solvent, it becomes possible to provide the curling preventive effects.

With respect to the water-soluble organic solvent, examples thereof include alcohols such as methanol, ethanol, propanol and butanol; cyclic alcohols such as cyclohexanol; ketones such as acetone, methylethyl ketone and diethyl ketone; cellosolves such as ethylene glycol monomethyl ether and ethylene glycol monoethyl ether; esters such as ethyl acetate, methyl acetate and propyl acetate; cellosolve esters such as ethylene glycol monomethyl ether acetate and propylene glycol monomethyl ether acetate; and other commonly-used organic solvents such as propylene glycol monomethyl ether, propylene glycol monoethyl ether, dimethyl formamide, dimethyl sulfoxide, 2-pyrrolidone, N-methyl pyrrolidone, tetrahydrofran, acetonitrile and toluene. Among these, alcohols such as methanol and ethanol are preferably used from the viewpoint of easy handling. The added amount of the water-soluble organic solvent is preferably set in a range from 0.1 to 15 % by mass, preferably, from 0.5 to 5 % by mass, with respect to the total mass of the ink-receiving layer coating solution.

- Support -

With respect to the support, any one of materials such as a transparent support made from a transparent material like plastic, and an opaque support made from an opaque material like paper. Here, in order to effectively utilize transparency of the ink-receiving layer, the transparent support or the opaque support with high gloss is preferably used. Moreover, a read-only optical disc such as a CD-ROM and a DVD-ROM, a write-once optical disc such as a CD-R and a DVD-R or a rewritable optical disc may be used as the support and the ink-receiving layer may be formed on both of the level sides.

With respect to the material to be used for the transparent support, those materials with transparency, which are resistant to radiation heat to be applied thereon when used as an OHP and a backlight display, are preferably used. Examples of the materials include polyesters such as polyethylene terephthalate (PET); polysulfone, polyphenylene oxide, polyimide, polycarbonate and polyamide. Among these, polyesters are preferably used, and in particular, polyethylene terephthalate is more preferably used.

Although not particularly limited, the thickness of the transparent support is preferably set in a range from 50 to 200 $\mu$ m from the viewpoint of easy handling.

With respect to the opaque support with high gloss, those materials having a degree of gloss of not less than 40 % on the surface on which the ink-receiving layer is formed are preferably used. The degree of gloss is a value that is found through a method described in JIS P-8142 (75-degree mirror-face gloss testing method on paper and cardboard). More specifically, the following supports are used:

Examples thereof include: paper supports with high gloss, such as art paper, coat paper, cast coat paper and baryta paper to be used as a silver-salt photographing support; polyesters such as polyethylene terephthalate (PET); cellulose esters such as nitrocellulose, cellulose acetate and cellulose acetate butyrate; films with high gloss prepared by allowing a plastic film, such as polysulfone, polyphenylene oxide, polyimide, polycarbonate and polyamide, to contain a white pigment and the like to be made opaque (the surface of which may be subjected to a calender process); or supports prepared by forming a coated layer of polyolefin that contains a white pigment or does not contain a white pigment on the surface of each of the various kinds of supports, the transparent support or the film with high gloss that contains a white pigment or the like. A white-pigment-containing foamed polyester film (for example, foamed PET prepared by subjecting a PET material containing polyolefin fine particles to a drawing process to form voids therein) may also be preferably used. Moreover, resin-coated paper to be used as silver-salt photographic printing paper is also preferably adopted.

Although not particularly limited, the thickness of the opaque support is preferably set in a range from 50 to 300 $\mu$ m from the viewpoint of easy handling.

In order to improve the wettability and adhesiveness, the surface of the support may be subjected to a corona discharging process, a glow discharging process, a flame treatment or an ultraviolet-ray irradiation process.

Next, the following description will discuss the base paper to be used as the paper support such as resin-coated paper, in detail.

The base paper is formed by using wood pulp as a main material and utilizing synthetic pulp such as polypropylene or synthetic fibers such as nylon and polyester in addition to the wood pulp, if necessary. With respect to the wood pulp, any one of LBKP, LBSP, NBKP, NBSP, LDP, NDP, LUKP and NUKP may be used. More amount of LBK, NBSP, LBSP, NDP or LDP that has more short-fiber components is preferably used. However, the ratio of LBS and/or LDP is preferably set in a range from 10 % by mass or more to 70 % by mass or less.

With respect to the above-mentioned pulp, chemical pulps containing less impurities (sulfate pulp and sulfite pulp) are preferably used, and pulps having an improved degree of whiteness through a bleaching process are also used effectively.

To the base paper are appropriately added a sizing agent such as higher fatty acid and alkyl ketene dimer, a white pigment such as calcium carbonate, talc and titanium oxide, a paper-strength increasing agent such as starch, polyacrylic amide and polyvinyl alcohol, a fluorescent whitening agent, a moisture-holding agent such as polyethylene glycols, a dispersant and a softening agent such as quaternary ammonium.

The water-filtering degree of the pulp to be used for forming paper is preferably set in a range from 200 to 500 ml in accordance with CSF, and the sum of the 24-mesh residue components (% by mass) and the 42-mesh residue components (% by mass) is preferably set in a range from 30 to 70 % so as to properly adjust the fiber length after the beating process. Here, the 4-mesh residue components (% by mass) are preferably set to not more than 20 % by mass.

The basis weight of the base paper is preferably set in a range from 30 to 250 g, more preferably, from 50 to 200 g. The thickness of the base paper is preferably set in a range from 40 to 250 $\mu$m. During the paper-forming processes or after the paper-forming processes, the base paper may be subjected to a calender process so as to have high smoothness. The base paper density is normally set in a range from 0.7 to 1.2 g/m$^2$ (JIS P-8118).

Moreover, the stiffness of the base paper is preferably set in a range from 20 to 200 g under conditions in accordance with JIS P-8143.

A surface-sizing agent may be applied to the surface of the base paper, and with respect to the surface-sizing agent, the same sizing agent as the sizing agent to be added into the base paper may be used.

The pH of the base paper, which is measured by a hot-water extracting method as specified in JIS P-8113, is preferably set in a range from 5 to 9.

Polyethylene with which the surface and rear surface of the base paper are coated is mainly composed of low-density polyethylene (LDPE) and/or high-density polyethylene (HDPE); however, other LLDPE, polypropylene and the like may be partially used.

In particular, the polyethylene layer, which is formed on the side corresponding to the ink-receiving layer, is preferably made from a polyethylene material prepared by adding a rutile or anatase-type titanium oxide, a fluorescent bleaching agent and an ultramarine blue pigment to polyethylene so that the opacity, whiteness degree and color tone are improved. The content of the titanium oxide is preferably set in a range from 3 to 20 % by mass, preferably, 4 to 13 % by mass, with respect to the amount of polyethylene. Although not particularly limited, the thickness of the polyethylene layer is preferably set in a range from 10 to 50 $\mu$ m with respect to both of the surface and rear surface layers. Here, an undercoat layer may be placed on the polyethylene layer so as to provide adhesiveness with the ink-receiving layer. With respect to the undercoat layer, a material such as an aqueous polyester, gelatin and PVA is preferably used. Moreover, the thickness of the undercoat layer is preferably set in a range from 0.01 to 5 $\mu$ m.

With respect to the polyethylene coating paper, glossy paper may be used, or those paper materials, which are subjected to a so-called shape-forming process when polyethylene is melt-extruded onto the surface of the polyethylene base paper to be applied thereto so as to have a mat-like face or a silky face as is obtained in normal photographic paper, may be used.

A backcoat layer may be formed on the support, and with respect to components to be added to the backcoat layer, a white pigment, an aqueous binder and other components may be used.

With respect to the white pigment to be added to the backcoat layer, examples thereof include: white inorganic pigments, such as light calcium carbonate, heavy calcium carbonate, kaolin, talc, calcium sulfate, barium sulfate, titanium dioxide, zinc oxide, zinc sulfide, zinc carbonate, satin white, aluminum silicate, diatom earth, calcium silicate, magnesium silicate, synthesized amorphous silica, colloidal silica, colloidal alumina, pseudoboehmite, aluminum hydroxide, alumina, lithopone, zeolite, hydro-halloysite, magnesium carbonate and magnesium hydroxide, and organic pigments, such as styrene-based plastic pigments, acryl-based plastic pigments, polyethylene, microcapsules, urea resin and melamine resin.

With respect to the aqueous binder to be added to the backcoat layer, examples thereof include: water-soluble high molecular compounds, such as styrene/maleate copolymer, styrene/acrylate copolymer, polyvinyl alcohol, silanol-modified polyvinyl alcohol, starch, cationized starch, casein, gelatin, carboxymethyl cellulose, hydroxyethyl cellulose and polyvinyl pyrrolidone, and water-dispersible high molecular compounds such as styrene-butadiene latex and acrylic emulsion.

With respect to the other components to be added to the backcoat layer, for example, an antifoamer, a foam suppressor, dyes, a fluorescent bleaching agent, an antiseptic agent and a water resistant agent are listed.

-Production of ink-jet recording medium -

The following description will discuss a producing method for an ink-jet recording medium in detail.

The ink-jet recording medium of the invention is manufactured through processes in which a coating solution used for forming an ink-receiving-layer (ink-receiving layer coating solution) is applied onto a support and dried thereon to form an ink-receiving layer, and this ink-receiving layer coating solution is most preferably prepared by using an inorganic fine-particle dispersion of the invention, which is prepared by adding inorganic fine particles and a dispersant to an aqueous medium. Moreover, the inorganic fine particle dispersion is prepared by carrying out the dispersing processes of the inorganic fine particles in the following manner: (1) the dispersant and the inorganic fine particles are added to the aqueous medium in a divided manner two or more times, respectively, or (2) the dispersant and the inorganic fine particles are continuously added to the aqueous medium, respectively.

In each of the above-mentioned methods (1) and (2), after at least one portion of the inorganic fine particles and/or at least one portion of the dispersant have been added thereto, or in the case where the inorganic fine particles and the dispersant are added simultaneously in a continuous manner, the ratio of additions of the dispersant to the inorganic fine particles is allowed to satisfy the aforementioned relationship, that is, the adding stage (time zone) in which the adding condition of Dt/It < D/I is satisfied is included in the dispersing processes. Here, in the case where the number of times is set to infinite times, that is the above-mentioned method (2), the added amount corresponds to an added amount per unit of time. In such a case, the ratio of added amount is preferably set so that, in the initial period of addition, the ratio of added amount of the inorganic fine particles to added amount of the dispersant is made greater, and in the latter period of addition and thereafter, the ratio of added amount of the dispersant to added amount of the inorganic fine particles is made greater. With this arrangement, the viscosity of the solution is maintained at a low level.

With respect to the aqueous medium, water or a mixed solvent of water and a solvent (for example, an organic solvent) having miscibility to water may be used. Examples of water include distilled water, ion exchange water, etc. Examples of the organic solvent include alcohols such as methanol, ethanol, n-propanol, i-propanol and methoxy propanol; ketones such as acetone and methylethyl ketone; tetrahydrofuran, acetonitrile, ethyl acetate and toluene.

The dispersant and the inorganic fine particles are preferably added while the aqueous solvent is being stirred by a dissolver or the like. Even after the addition of these, the stirring process by the dissolver is continued, and a fine-particle-forming process is preferably carried out by using a sand grinder, etc, if necessary. Thus, it becomes possible to obtain an inorganic fine particle dispersion that is uniformly dispersed with low viscosity.

Moreover, in the case when in addition to the dispersant and the inorganic fine particles, a hardening agent, a metal salt and the like are further added thereto, the adding processes are carried out during the addition of the dispersant and the inorganic fine particles or at any desired stage before or after the addition.

The water-soluble resin aqueous solution such as a polyvinyl alcohol aqueous solution, a surfactant and other desired components are added to the inorganic fine particle dispersion and mixed therein so that an ink-receiving layer coating solution (first solution) can be prepared. This solution may further contain a metal salt (preferably, water-soluble metal salt) so that it becomes possible to prevent bleeding over time.

The resulting coating solution (first solution), which is in an uniform sol state, is applied onto a support by using, for example, a known coating method, and dried thereon so that a porous ink-receiving layer having a three-dimensional net structure can be formed.

Upon producing an ink-jet recording medium, the ink-receiving layer, which is one constituent member of the medium, is preferably formed through the following processes: the ink-receiving layer coating solution (first solution), prepared by using the inorganic fine particle dispersion of the invention so as to contain at least the inorganic fine particles and the water-soluble resin, is applied onto a support to form a coated layer thereon, and (1) simultaneously with the application of the coating solution (first solution), or (2) during drying of the coated layer formed by applying the coating solution, and before the coated layer exhibits a decreasing rate of drying, a basic solution (second solution) having a pH value of not less than pH 7.1 is applied to the coated layer so that the coated layer is cross-linked and cured (Wet on Wet method). The formation of the ink-receiving layer, thus cross-linked and cured, makes it possible to preferably improve the ink-absorbing property and also to prevent cracks in the film.

The basic solution (second solution) is prepared through, for example, the following processes. Required mordant (for example, 0.1 to 5.0 % by mass) and surfactants (for example, total amount: 0.01 to 1.0 % by mass) are added to ion exchange water and stirred sufficiently. The pH value of the second solution is preferably set to not less than 7.1, and the pH adjustment is appropriately carried out by using ammonia water, sodium hydroxide, calcium hydroxide, an amino-group-containing compound (such as ethyl amine, ethanol amine, dimethanol amine and polyallyl amine), etc.

In the case when the mordant is added to the second solution, since more mordant is present at predetermined portions in the ink-receiving layer so that the colorants in the ink-jet ink are sufficiently mordanted; thus, it becomes possible to desirably improve the color density, bleeding over time preventive property, gloss in the image-printed portion, water resistance of characters and images after having been printed, and ozone resistant property.

With respect to the coating method of the ink-receiving layer coating solution, for example, any of known coating methods, such as an extrusion die coater, an air doctor coater, a blade coater, a rod coater, a knife coater, a squeeze coater, a reverse roll coater and a bar coater, may be used.

Simultaneously with the coating process of the first solution (ink-receiving layer coating solution) or after the coating process, the second solution (basic solution) is applied to the coated layer thus formed, and the second solution may be applied before the coated layer exhibits a decreasing rate of drying. In other words, by introducing the basic solution while, after having applied the ink-receiving layer coating solution, the coated layer exhibits a constant rate of drying, the layer is desirably formed. The second solution may contain a mordant.

Here, the expression "before the coated layer exhibits a decreasing rate of drying" normally refers to a period of time for several minutes immediately after the application of the ink-receiving layer coating solution, and during this period, the phenomenon of "constant rate of drying", in which the content of the solvent (dispersant) decreases in proportion to time, is exerted. With respect to the period during which the "constant rate of drying" is exerted, the corresponding description is found in Chemical Engineering Handbook (p. 707 to p. 712, published on October 25, 1980, by Maruzen).

As described above, the drying process is carried out until the coated layer exhibits the decreasing rate of drying after the application of the first solution, and the drying process is generally carried out at a temperature in a range from 40 to 180°C for 0.5 to 10 minutes (preferably, for 0.5 to 5 minutes). Although the drying period differs depending on the coating amount, it is generally set in the above-mentioned range appropriately.

With respect to the method for applying the second solution before the coated layer exhibits a decreasing rate of drying, (i) a method in which the second solution is further applied to the coated layer, (ii) a method in which the second solution is atomized thereon through a spraying method or the like and (iii) a method in which the support on which the coated layer has been formed is immersed in the second solution, have been proposed.

With respect to the coating method of the second solution in the above-mentioned method (i), for example, any of known coating methods, such as a curtain flow coater, an extrusion die coater, an air doctor coater, a blade coater, a rod coater, a knife coater, a squeeze coater, a reverse roll coater and a bar coater, may be used. Here, methods, such as the extrusion die coater, the curtain flow coater and the bar coater, in which the coater is not directly made in contact with the first coated layer that has been formed, are preferably utilized.

The added amount of the second solution is generally set in a range from 5 to 50 g/m$^2$, preferably, from 10 to 30 g/m$^2$.

After the application of the second solution, in general, a heating process in a range from 40 to 180°C is carried out for 0.5 to 30 minutes so that the drying and curing processes are carried out. In particular, the heating process is preferably carried out in a range from 40 to 150°C for 1 to 20 minutes.

In the case when the basic solvent (second solution) is applied simultaneously with the application of the ink-receiving layer coating solution (first solution), the first solution and the second solution are simultaneously applied (superposed application), and these are then dried and cured so that an ink receiving layer is formed.

The simultaneous application (superposed application) is carried out by using, for example, an extrusion die coater.or a curtain flow coater. After the simultaneous application, the coated layer is dried, and this drying process is normally carried out by heating the coated layer at a temperature in a range from 40 to 150°C for 0.5 to 10 minutes, preferably, in a range from 40 to 100°C for 0.5 to 5 minutes.

In the case when the above-mentioned simultaneous application (superposed application) is carried out by, for example, the extrusion die coater, the two kinds of solutions, which are simultaneously discharged, are allowed to form a stratified layer in the vicinity of the discharging outlet of the extrusion die coater, that is, prior to moving onto the support, and stratified and applied onto the support in this state. The coating solution, which has been stratified into two layers prior to the application, tends to cause a crosslinking reaction on the interface of the two solutions upon moving onto the support so that in the vicinity of the discharging outlet of the extrusion die coater, the discharged two solutions are easily mixed with each other to have high viscosity, sometimes resulting in a problem with the coating operation. Therefore, in the case when the simultaneous coating process is carried out as described above, upon applying the first solution and the second solution, a barrier layer solution (intermediate layer solution) is interpolated between the first solution and the second solution so that simultaneous triple-layer coating operations are preferably carried out.

Not particularly limited, the barrier layer solution is selected. For example, an aqueous solution containing a slight amount of water-soluble resin and water may be used. The water-soluble resin is used as a thickener so as to improve the coating property, and examples thereof include cellulose-based resins (for example, hydroxypropylmethyl cellulose, methyl cellulose, hydroxyethylmethyl cellulose, etc.) and polymers such as polyvinyl pyrrolidone and gelatin. Here, the barrier layer solution may contain the aforementioned mordant.

Moreover, the coating process of the ink-receiving-layer coating solution may be carried out by using a so-called set drying process. In this case, the ink-receiving layer coating solution, heated to not less than 40°C, is applied onto a support, and this is then cooled to not more than 15°C so that the coating solution applied onto the support is gelled (set), and hot dry air of not more than 50°C is blown thereto so that the solvent such as water is evaporated and dried to form a porous film. Upon drying, from the viewpoint of prevention of cracks in the porous film, the relative humidity is preferably adjusted to about 50 % at the final stage of the drying process. Although not particularly limited since it differs depending on the coating amount and the amount of air discharge, the drying time is generally set in a range from 1 to 15 minutes.

After the formation of the ink-receiving layer on the support, the ink-receiving layer may be subjected to a calender process in which it is passed through a roll nip in a heat and pressure applied state by using, for example, a super calender, a gloss calender or the like so that the surface smoothness, gloss, transparency and coat-film strength can be improved. However, since the calender process tends to cause a reduction in void ratio (that is, the ink absorbing property tends to lower), it is necessary to set conditions with small lowering in the void ratio upon carrying out the calender process.

Upon carrying out the calender process, the roll temperature is preferably set in a range from 30 to 150°C, preferably, from 40 to 100°C. Moreover, with respect to the line pressure between rolls upon carrying out the calender process, it is preferably set in a range from 50 to 400 kg/cm, more preferably, from 100 to 200 kg/cm.

In the case of ink-jet recording, the layer thickness of the ink-receiving layer needs to be set to provide an absorbing capacity to sufficiently absorb all the droplets; therefore, the layer thickness is determined in association with the void ratio in the layer. For example, supposing that the amount of ink is 8 nL/mm$^2$ with a void ratio of 60 %, the layer thickness needs to be set to approximately not less than 15 $\mu$m. From this point of view, in the case of ink-jet recording, the layer thickness of the ink-receiving layer is preferably set in a range from 10 to 50 $\mu$m.

The pore size of the ink-receiving layer is preferably set in a range from 0.005 to 0.030 $\mu$m, more preferably from 0.01 to 0.25 $\mu$m, in the median diameter, and it is set at 0.1. The void ratio and pore median diameter can be measured by using a mercury porosimeter (trade name: "Pore Sizer 9320-PC2" manufactured by Shimadzu Corporation).

It is desirable that the ink-receiving layer is excellent in the transparency, and from this point of view, the haze value is set at 30% or less, more preferably, at 20% or less, when the ink-receiving layer is formed on the transparent film support. The haze value can be measured by using a Haze Meter (HGM-2DP; manufactured by Suga Test Instruments Co., Ltd.).

The constituent layers (for example, the ink-receiving layer and the back layer) of the ink-jet recording medium of the invention may contain a polymer fine-particle dispersion material. This fine-particle dispersion material is used for improving the film physical properties, such as the dimensional stability, curling preventive property, adhesion-preventive property and crack-preventive property in the film. With respect to the polymer fine-particle dispersion material, corresponding descriptions are found in Japanese Patent Application Laid-Opens Nos. 62-245258, 62-1316648 and 62-110066. Here, when a polymer fine-particle dispersion material having a low glass transition temperature (40°C or less) is added to a layer containing a mordant, it is possible to prevent cracks and curling in the layer. Moreover, when a polymer fine-particle dispersion material having a high glass transition temperature is added to a back layer, it is possible to prevent curling in the layer.

The following description will discuss image-recording materials other than the above-mentioned ink-jet recording medium.

-Electrophotographic image-receiving material -

The electrophotographic image-receiving material includes a support and at least one layer of a toner image-receiving layer (recording layer) and may further includes other layers appropriately selected on demand, for example, a surface protective layer, an intermediate layer, an undercoat layer, a cushion layer, a charge-adjusting (preventive) layer, a reflective layer, a color-tone adjusting layer, a storability-improving layer, an adhesion preventive layer, an anti-curling layer and a smoothing layer. Each of these layers may have a single-layer structure or a laminated-layer structure.

- Silver-salt photographic photosensitive material -

With respect to a silver-salt photographic photosensitive material, for example, a material, which has a structure in which at least a photosensitive layer (recording layer) capable of developing colors of YMC is formed on a support, and is used for a silver halide photographic system in which, after having been printed and exposed, the resulting material is allowed to pass through a plurality of processing vessels while being successively immersed in the vessels so that the color-developing process, bleaching process, washing process and drying process are carried out to obtain an image, may be used.

-Thermal transfer image-receiving material-

With respect to a thermal transfer image-receiving material, a material which has a structure in which at least an image-receiving layer (recording layer) is formed on a support, and is used for a system in which a thermal transfer material, constituted by at least a thermal-fusing ink layer formed on a support, is heated by a heat-sensitive head so that ink from the thermal-fusing ink layer is fused and transferred thereon, may be used.

- Heat-sensitive color-developing recording material -

With respect to a heat-sensitive color-developing recording material, a material which has a structure in which at least a thermal color-developing layer (recording layer) is formed on a support, and is used for a thermo-auto-chrome system (TA system) in which a heating process by a heat-sensitive head and a fixing process by ultraviolet rays are repeated so that thermal-color developing processes are carried out to form an image, may be used.

- Sublimation transfer image-receiving material -

With respect to a sublimation transfer image-receiving material, a material which has a structure in which at least a thermal image-receiving layer (recording layer) is formed on a support, and is used for a sublimation transfer system in which a sublimation transfer material constituted by at least an ink layer containing a thermal dispersion pigment (sublimation pigment) formed on a support is heated by a heat-sensitive head so that the thermal dispersion pigment is transferred from the ink layer, may be used.

Here, the above-mentioned electrophotographic image-receiving material, heat-sensitive color-developing recording material, sublimation transfer image-receiving material, thermal transfer image-receiving material or silver-salt photographic photosensitive material may be produced by forming a recording layer through a method similar to the producing method for the above-mentioned ink-jet recording medium using a prepared solution that has been prepared by using inorganic fine dispersion of the invention so that at least a recording layer (a toner image-receiving layer, a thermal color-developing layer, an image-receiving layer or a photosensitive layer) corresponding to each of the materials is formed on a support.

*Second producing method for inorganic fine particles, inorganic fine particle dispersion and ink-jet recording medium*

A second producing method of the inorganic fine particle dispersion of the invention is characterized in adding inorganic fine particles to an aqueous medium containing water, a polymer dispersant and a water-soluble or hydrophobic metal salt and then executing a dispersion process. Also a second inorganic fine particle dispersion of the invention is characterized in being produced by the aforementioned method, and a second ink-jet recording medium of the invention is characterized in being prepared by using the second inorganic fine particle dispersion of the invention.
In the following, the second inorganic fine particle dispersion, the producing method thereof, and the ink-jet recording medium will be explained in detail.

(Inorganic fine particle dispersion and a method for producing the same)

The second producing method of the inorganic fine particle dispersion of the invention is characterized in adding inorganic fine particles to an aqueous medium containing water, a polymer dispersant and a water-soluble or hydrophobic metal salt and then executing a dispersion process. An order or a method of addition of these components is not particularly restricted, however they may be added in two or more divided times or in continuous manner as shown in the following.
The inorganic fine particle dispersion can be obtained by:

(1) dispersing the inorganic fine particles by adding the polymer dispersant and the inorganic fine particles respectively in two or more times to the aqueous medium; or
(2) dispersing the inorganic fine particles by adding the polymer dispersant and the inorganic fine particles respectively continuously into the aqueous medium.

In method (1), in a case where the polymer dispersant and the inorganic fine particles are added twice, respectively, it is preferable to add the polymer dispersant in an amount of 10 - 60 % by mass the first time and the entire remaining amount the second time, and to add the inorganic fine particles in an amount of 50 - 90 % by mass the first time and the entire remaining amount the second time. It is particularly preferable to add the polymer dispersant in an amount of 30 - 40 % by mass the first time and the entire remaining amount the second time, and to add the inorganic fine particles in an amount of 60 - 70 % by mass the first time and the entire remaining amount the second time.
In case the polymer dispersant and the inorganic fine particles are added respectively in three or more divided portions, the respective amounts can be suitably determined in consideration of amounts of water (solvent) and inorganic fine particles, an agitation speed and the like, but it is preferable to increase a ratio of the polymer dispersant to the inorganic fine particles toward a later stage of the addition.
Also in case of an infinite number of divided portions, namely in the method (2) of adding the polymer dispersant and the inorganic fine particles respectively in continuous manner, respective amounts of addition per time can be suitably determined in consideration of amounts of water (solvent) and inorganic fine particles, an agitation speed and the like, but it is preferable to increase a ratio of the polymer dispersant to the inorganic fine particles toward a later stage of the addition.
In any of the aforementioned methods, it is preferable to add the polymer dispersant and the inorganic fine particles at the same time or to add a part of the polymer dispersant in advance, whereby a low viscosity in the liquid can be maintained.
The addition of the polymer dispersant and the inorganic fine particles is preferably executed under an agitation of the aqueous medium for example with a dissolver.
The inorganic fine particle dispersion can be obtained by continuing the agitation with the dissolver after the addition, and by executing a fine particle forming process for example with a sand grinder if necessary.

- Water (solvent) -

In this producing method, water (solvent) to be contained in the aqueous medium can be distilled water or ion-exchanged water. A content of the water is preferably 75 - 95 % by mass in the inorganic fine particle dispersion, particularly preferably 80 - 90 % by mass.

-Polymer dispersant -

In the invention, a polymer dispersant is added to the aqueous medium in order to satisfactorily disperse the inorganic fine particles. Also, as will be explained later, the polymer dispersant has a function as a mordant in case of employing an aqueous medium, thereby improving a water resistance and a resistance to bleeding over time in a formed image.

Such polymer dispersant is preferably a cationic polymer (cationic polymer dispersant), and particularly preferably an acrylic cationic polymer containing an aromatic group. Such polymer dispersant present in the ink-receiving layer causes an interaction with a liquid ink containing an anionic dye as an ink to stabilize the ink, thereby improving the water resistance and the resistance to bleeding over time. The polymer dispersant may be employed singly or in a combination of two or more kinds.

As such cationic polymer dispersant, there is generally employed a polymer dispersant including a primary to tertiary amino group or a quaternary ammonium salt group as a cationic group.

The polymer dispersant can be obtained as a single polymer of a monomer (mordant monomer) having a primary to tertiary amino group or a salt thereof, or a quaternary ammonium salt group or a copolymer or a condensation polymer of such mordant monomer and another monomer (hereinafter called "non-mordant monomer"). Also such polymer dispersant may be used in a form of a water-soluble polymer or water-dispersible latex particles.

With respect to the above-nentioned monomer (mordant monomer), examples thereof include: quaternary compounds derived from methyl chlorides, ethyl chlorides, methyl bromides, ethyl bromides methyl iodides or ethyl iodides, such as trimethyl-p-vinylbenzyl ammonium chloride, trimethyl-m-inylbenzyl ammonium chloride, triethyl-p-vinylbenzyl ammonium chloride, triethyl-m-vinylbenzyl ammonium chloride, N,N-dimethyl-N-ethyl-N-p-vinylbenzyl ammonium chloride, N,N-diethyl-N-methyl-N-p-vinylbenzyl ammonium chloride, N,N-dimethyl-N-n-propyl-N-p-vinylbenzyl ammonium chloride, N,N-dimethyl-N-n-octyl-N-vinylbenzyl ammonium chloride, N,N-dimethyl-N-benzyl-N-p-vinylbenzyl ammonium chloride, N,N-diethyl-N-benzyl-N-p-vinylbenzyl ammonium chloride, N,N-dimethyl-N-(4-methyl)benzyl-N-p-vinylbenzyl ammonium chloride, N,N-dimethyl-N-phenyl-N-p-vinylbenzyl ammonium chloride, trimethyl-p-vinylbenzyl ammonium bromide, trimethyl-m-vinylbenzyl ammonium bromide, trimethyl-p-vinylbenzyl ammonium sulfonate, trimethyl-m-vinylbenzyl ammonium sulfonate, trimethyl-p-vinylbenzyl ammonium acetate, trimethyl-m-vinylbenzyl ammonium acetate, N,N,N-triethyl-N-2-(4-vinylphenyl)ethyl ammonium chloride, N,N,N-triethyl-N-2-(3-vinylphenyl)ethyl ammonium chloride, N,N,N-diethyl-N-methyl-N-2-(4-vinylphenyl)ethyl ammonium chloride, N,N-diethyl-N-methyl-N-2-(4-vinylphenyl)ethyl ammonium acetate, N,N-dimethylaminoethyl (metha)acrylate, N,N-diethylaminoethyl (metha)acrylate, N,N-dimethylaminopropyl (metha)acrylate, N,N-diethylaminopropyl (metha)acrylate, N,N-dimethylaminoethyl (metha)acryl amide, N,N-diethylaminoethyl (metha)acryl amide, N,N-dimethylaminopropyl (metha)acryl amide, N,N-diethylaminopropyl (metha)acryl amide, or sulfonates, alkyl sulfonates, acetates or alkyl carboxylates formed by substituting anions of those compounds, etc.

Specific examples include: monomethyl diallyl ammonium chloride, trimethyl-2-(methacryloyloxy)ethyl ammonium chloride, triethyl-2-(methacryloyloxy)ethyl ammonium chloride, trimethyl-2-(acryloyloxy)ethyl ammonium chloride, triethyl-2-(acryloyloxy)ethyl ammonium chloride, trimethyl-3-(methacryloyloxy)propyl ammonium chloride, triethyl-3-(methacryloyloxy)propyl ammonium chloride, trimethyl-2-(methacryloylamino)ethyl ammonium chloride, triethyl-2-(methacryloylamino)ethyl ammonium chloride, trimethyl-2-(acryloylamino)ethyl ammonium chloride, triethyl-2-(acryloylamino)ethyl ammonium chloride, trimethyl-3-(methacryloylamino)propyl ammonium chloride, triethyl-3-(methacryloylamino)propyl ammonium chloride, trimethyl-3-(acryloylamino)propyl ammonium chloride and triethyl-3-(acryloylamino)propyl ammonium chloride, N,N-dimethyl-N-ethyl-2-(methacryloyloxy)ethyl ammonium chloride, N,N-diethyl-N-methyl-2-(methacryloyloxy)ethyl ammonium chloride, N,N-dimethyl-N-ethyl-3-(acryloylamino)propyl ammonium chloride, trimethyl-2-(methacryloyloxy)ethyl ammonium bromide, trimethyl-3-(acryloylamino)propyl ammonium bromide, trimethyl-2-(methacryloyloxy)ethyl ammonium sulfonate and trimethyl-3-(acryloylamino)propyl ammonium acetate. In addition to these, with respect to copolymerizable monomers, materials, such as N-vinyl imidazole and N-vinyl-2-methyl imidazole, are listed.

The above-mentioned non-mordant monomer is a monomer which contains neither a basic portion nor a cationic portion such as a primary to tertiary amino group and its salt or a quaternary ammonium salt, and exerts no interaction with a dye in ink-jet ink, or exerts only little interaction therewith.

With respect to the non-mordant monomer, examples thereof include: (metha)acrylic acid alkyl esters; (metha)acrylic acid cycloalkyl esters such as cyclohexyl (metha)acrylate; (metha)acrylic acid aryl esters such as phenyl(metha)acrylate; aralkyl esters such as benzyl (metha)acrylate; aromatic vinyls such as styrene, vinyl toluene and α -methylstyrene; vinyl esters such as vinyl acetate, vinyl propionate, versatic acid vinyl; allyl esters such as allyl acetate; halogen-containing monomers such as vinylidene chloride and vinyl chloride; vinyl cyanide such as (metha)acrylonitrile; and olefins such as ethylene and propylene.

With respect to the above-mentioned (metha)acrylic acid alkyl esters, (metha)acrylic acid alkyl esters with an alkyl portion having 1 to 18 carbon atoms are preferably used, and examples thereof include methyl(metha)acrylate, ethyl(metha)acrylate, propyl(metha)acrylate, isopropyl(metha)acrylate, n-butyl(metha)acrylate, isobutyl(metha)acrylate, t-butyl(metha)acrylate, hexyl(metha)acrylate, octyl(metha)acrylate, 2-ethylhexyl(metha)acrylate, lauryl(metha)acrylate and stearyl(metha)acrylate.

Among these, methylacrylate, ethylacrylate, methylmethacrylate, ethylmethacrylate and hydroxyethylmethacrylate are preferably used. Each of the above-mentioned non-mordant monomers may be used alone, or two or more kinds of these may be used in combination.

With respect to the polymer dispersant, preferable examples include: polydiallyldimethyl ammonium chloride, polymethacryloyloxyethyl-$\beta$-hydroxyethyldimethyl ammonium chloride, polyethyleneimine, polyallylamine and modified compounds thereof, polyallylamine hydrochloride, polyamide-polyamine resin, cationized starch, dicyandiamide formalin condensate, dimethyl-2-hydroxypropyl ammonium salt polymer, polyamidine, polyvinyl amine, and cationized acrylic emulsions of acrylic silicon latexes disclosed in Japanese Patent Application Laid-Open No. 10-264511, Japanese Patent Application Laid-Open No. 2000-43409, Japanese Patent Application Laid-Open No. 2000-343811 and Japanese Patent Application Laid-Open No. 2002-120452 (Aquabrid Series, for example, ASi-781, ASi-784, ASi-578 and ASi-903 manufactured by Daicel Chemical Industries, Ltd.).

Among these, more preferable examples include: an acrylic cationic polymer, such as Chemistat 7005 (manufactured by Sanyo Chemical Industries, Ltd.), a dimethyldiallyl ammonium chloride homopolymer such as Shallol DC-902P (manufactured by Dai-ichi Kogyo Seiyaku Co., Ltd.) and a copolymer of a cationic monomer and a nonionic monomer disclosed in Japanese Patent Application Laid-Open No. 11-20306.

The aforementioned polymer dispersant has a molecular weight, in mass-average molecular weight, preferably within a range of 2,000 - 300,000, more preferably 2,000 - 50,000. A molecular weight of 2,000 or larger can further improve the water resistance and the resistance to bleeding over time, and a molecular weight of 300,000 or less, more preferably 50,000 or less lowers the viscosity of the liquid, thereby improving the working property and also provides a coated film with a high gloss after drying.

Also in the invention, the content of the polymer dispersant in the inorganic fine particle dispersion is preferably 1 - 20 % by mass, and more preferably 2 - 10 % by mass.

- Metal salt -

In the invention, a water-soluble or hydrophobic metal salt is included in the inorganic fine particle dispersion, for the purpose of improving dispersibility of the inorganic fine particles.

The metal salt is preferably contained in the following range. In the inorganic fine particle dispersion, the metal salt is contained in 0.1 to 20 % by mass with respect to the inorganic fine particles (mass) to be explained later, more preferably 1 to 10 % by mass. The content within such range allows to effective suppress a viscosity increase at the dispersion of the inorganic fine particles, thereby further reducing the energy consumption in the production process, and such producing method allows to obtain an inorganic fine particle dispersion of a low viscosity. Specific examples of the water-soluble or hydrophobic metal salt include salts or complexes of metals selected from magnesium, aluminum, calcium, scandium, titanium, vanadium, manganese, iron, nickel, copper, zinc, gallium, germanium, strontium, yttrium, zirconium, molybdenum, indium, barium, lanthanum, cerium, praseodymium, neodymium, samarium, europium, gadolinium, dysprosium, erbium, ytterbium, hafnium, tungsten or bismuth.

Specific examples thereof include: calcium acetate, calcium chloride, calcium formate, calcium sulfate, barium acetate, barium sulfate, barium phosphate, manganese chloride, manganese acetate, manganese formate dehydrate, manganese ammonium sulfate hexahydrate, cupric chloride, ammonium chloride copper (II) dihydrate, copper sulfate, cobalt chloride, cobalt thiocyanate, cobalt sulfate, nickel sulfate hexahydrate, nickel chloride hexahydrate, nickel acetate tetrahydrate, nickel sulfate ammonium hexahydrate, amide nickel sulfate hexahydrate, aluminum sulfate, aluminum alum, basic polyaluminum hydroxide, aluminum sulfite, aluminum thiosulfate, polyaluminum chloride, aluminum nitrate nonahydrate, aluminum chloride hexahydrate, ferrous bromide, ferrous chloride, ferric chloride, ferrous sulfate, ferric sulfate, zinc phenolic sulfonate, zinc bromide, zinc chloride, zinc nitrate hexahydrate, zinc sulfate, titanium tetrachloride, tetraisopropyl titanate, titanium acetylacetonate, titanium lactate, zirconium acetylacetonate, zirconyl acetate, zirconyl sulfate, zirconium ammonium carbonate, zirconyl stearate, zirconyl octylate, zirconyl nitrate, zirconium oxychloride, zirconium hydroxychloride, chromium acetate, chromium sulfate, magnesium sulfate, magnesium chloride hexahydrate, magnesium citrate nanohydrate, sodium phosphor tungstate, sodium tungsten citrate, 12 tungust phosphate n-hydrate, 12 tungust silicate 26 hydrate, molybdenum chloride, 12 molybdo phosphate n-hydrate, gallium nitrate, germanium nitrate, strontium nitrate, yttrium acetate, yttrium chloride, yttrium nitrate, indium nitrate, lanthanum nitrate, lanthanum chloride, lanthanum acetate, lanthanum benzoate, cerium chloride, cerium sulfate, cerium octylate, praseodymium nitrate, neodymium nitrate, samarium nitrate, europium nitrate, gadolinium nitrate, dysprosium nitrate, erbium nitrate, ytterbium nitrate, hafnium chloride and bismuth nitrate.

The above metal salts may be used alone or two or more kinds of these may be used in combination.

In the water-soluble metal salt of the invention, "water-soluble" means having solubility of 1 % by mass or more in water at 20°C. Also in the hydrophobic metal salt, "hydrophobic" means not falling within the "water-soluble".

Among the aforementioned metal salts, a water-soluble metal salt is preferable, and a zirconium compound is particularly preferable. Examples of the water-soluble compound containing zirconium include zirconium acetylacetonate, zirconyl acetate, zirconyl sulfate, zirconium ammonium carbonate, zirconyl stearate, zirconyl octylate, zirconyl nitrate, zirconium oxychloride and zirconium hydroxychloride.

Also, as will be explained later, the metal salt has a function as a mordant in an aqueous medium, thereby improving a water resistance and a resistance to bleeding over time in a formed image.

- Inorganic fine particles -

The inorganic fine particle dispersion of the invention is formed by dispersing inorganic fine particles. The inorganic fine particles are advantageously inorganic pigment fine particles, which can be, for example, silica fine particles (gas phase silica or hydrous silica fine particles), colloidal silica, titanium dioxide, barium sulfate, calcium silicate, zeolite, kaolinite, halloysite, mica, talc, calcium carbonate, magnesium carbonate, calcium sulfate, boehmite, and pseudoboehmite.

The inorganic fine particles preferably have an average primary particle size of 20 nm or less, more preferably 10 nm or less and particularly preferably 3 - 10 nm. A particle size range of 20 nm or less enables preparation of a dispersion of a finer dispersed state. A small particle size particularly with an average primary particle size of 10 nm or less increases the surface area of the particles thereby generally facilitating aggregation and deteriorating the dispersion stability, but a dispersion in an aqueous medium in the presence of the aforementioned water-soluble or hydrophobic metal salt allows to obtain a dispersion of a satisfactory dispersion stability. Also in the preparation of a ink-receiving layer coating solution, as will be explained later, an average primary particle size of 20 nm or less (particularly 10 nm or less) allows to obtain a structure with a high void ratio thereby effectively improving the ink absorbing property of the ink-receiving layer, and also to increase the gloss of the surface of the ink-receiving layer and to improve the ozone resistance and the light fastness of a printed image.

The average primary particle size mentioned above can be measured for example with an electron microscope.

Among such inorganic fine particles, silica fine particles are preferable and gas-phase silica is particularly preferable. In case gas-phase silica is employed in combination with other inorganic fine particles, the gas-phase silica preferably occupies a proportion of 50 % by mass or more in the total inorganic fine particles, and more preferably 60 % by mass or more.

The silica fine particles, including gas-phase silica, tend to aggregate after the dispersion because of a particularly large specific surface area, but are useful as a dispersed substance in the inorganic fine particle dispersion of the invention, as the dispersion stability can be effectively improved by a dispersion in an aqueous medium in the presence of the aforementioned water-soluble or hydrophobic metal salt. Also in case of forming an ink-receiving layer as will be explained later, such fine particles can provide a porous structure, high absorption and holding efficiencies for the ink and a low refractive index, and are preferable in providing the receiving layer with a transparency and in obtaining a high color density and a satisfactory color developing property when the dispersion is made to an appropriate particle size. A transparency in the receiving layer is important not only in an application requiring a transparency such as an OHP but, also in a recording medium such as a photographic glossy paper, for obtaining a high color density, a satisfactory color development and a high gloss.

In particular, the silica fine particles have a silanol group on the surface of each particle so that a hydrogen bond of the silanol group allows the particles to easily adhere to each other, and an adhering effect is exerted between the particles through the silanol group and a water-soluble resin; therefore, in the case when the average primary particle size is set to not more than 20 nm, the void ratio in the ink-receiving layer increases to form a structure having high transparency, making it possible to effectively improve the ink-absorbing property.

Based upon producing methods, the silica fine particles are normally classified into wet method particles and dry method (gas-phase method) particles. In the wet method, normally, active silica is generated through an acid decomposition of the silicate, and this is properly polymerized and aggregation-precipitated to obtain hydrous silica. In contrast, in the gas-phase method, normally, anhydrous silica is obtained through a method (flame hydrolysis method) in which halogenated silicon is subjected to a high-temperature gas-phase hydrolysis and a method (arc method) in which silica sand and cokes are heated and reduction-vaporized through arc in an electric furnace so that the resulting matter is oxidized with air to produce anhydrous silica; and "gas-phase silica" refers to anhydrous silica fine particles obtained through the gas-phase method.

The gas-phase silica is different from the hydrous silica for example in a density of surfacial silanol groups and presence/absence of pores and show different properties, and is suitable, for example in case of preparing an ink-receiving layer as will be explained later, for forming a three-dimensional structure having a high void ratio. The reason thereof is not clarified, but it is estimated that the hydrous silica has a density of silanol groups as high as 5 - 8/nm$^2$ on the fine particle surface and easily cause a dense aggregation of the silica fine particles, while the gas-phase silica has a lower density of silanol groups of 2 - 3/nm$^2$ on the fine particle surface and forms a less dense flocculate thereby leading to a structure of a high void ratio. Also for this reason, there is preferred the gas-phase silica fine particles (anhydrous silica) obtained by the dry method, or the silica fine particles having a density of silanol groups of 2 - 3/nm$^2$ on the fine particle surface.

Pseudoboehmite is a laminar compound represented by $Al_2O_3 \cdot xH_2O$ (1 < x < 2) and having a crystal structure in which a (020) plane constitutes a large plane, with a lattice constant d of 0.67 nm. The pseudoboehmite has a structure containing excess water between the layers of (020) planes. The pseudo boehmite satisfactorily absorbs and fixes an ink, and can improve the absorbing property and the resistance to bleeding over time for the ink. Also in easily providing a smooth layer, pseudo boehmite in a sol state (pseudo boehmite sol) is preferably employed as a raw material.

Also the pseudoboehmite preferably has an aspect ratio of 3 - 10. As to the pore structure of the pseudoboehmite, it preferably has an average pore radius of 1 - 30 nm, more preferably 2 - 15 nm. Also it preferably has a pore volume of 0.3 - 2.0 ml/g, more preferably 0.5 -1.5 ml/g. The pore radius and the pore volume can be measured by a nitrogen adsorption/desorption method, for example with a gas adsorption/desorption analyzer (for example Omnisorp 369 (trade name), manufacture by Beckman Coulter Inc.).

Also the inorganic fine particles in the invention preferably have a specific surface area by a BET method of 250 m$^2$/g or higher. A small particle size of a specific surface area by a BET method of 250 m$^2$/g or higher increases the surface area of the particles thereby generally facilitating aggregation and deteriorating the dispersion stability, but a dispersion in an aqueous medium in the presence of the aforementioned water-soluble or hydrophobic metal salt allows to effectively improve the dispersion stability. Also in the preparation of an ink-receiving layer, as will be explained later, it is possible to improve the ink absorbing property and the print density of the ink-receiving layer. On the other hand, an increase in the specific surface area enhances exposure to light, air and particularly ozone, but a satisfactory dispersion stability of the finer inorganic fine particles can effectively prevent losses in the light fastness and the ozone resistance of the image after printing. The pseudoboehmite preferably has a specific surface area by BET method of 250 - 500 m$^2$/g.

Also the specific surface area of 250 m$^2$/g or higher, in case of forming an ink-receiving layer as will be explained later, can improve the ink absorbing property, the rapid drying property and the resistance to the ink bleeding, thereby being advantageous in forming a high-quality image and in increasing the print density.

The BET method is one of the methods of measuring a surface area of powder by gas adsorption, and determines a total surface area of a sample of 1 g, namely a specific surface area, from an isothermal adsorption line. There is generally employed a method of employing nitrogen as an adsorbed gas, and measuring an adsorbed amount from a change in the pressure or the volume of the adsorbed gas. An adsorption amount is determined from a known equation of Brunauer, Emmett and Teller (BET equation) representing an isothermal polymolecular adsorption, and is multiplied by a surface area occupied by an adsorbed molecule to obtain a surface area.

In the inorganic fine particle dispersion, the inorganic fine particles preferably has a content of 5 - 25 % by mass with respect to the total mass of the dispersion, more preferably 8 - 20 % by mass.

- Crosslinking agent -

The inorganic fine particle dispersion of the invention may include a crosslinking agent that can crosslink a water-soluble resin to be explained later.

The crosslinking agent can be suitably selected according to a relation to the water-soluble resin contained in the ink-receiving layer, but is preferably boric acid or a boron compound in consideration of a rapid crosslinking reaction. The boron compound can be, for example, borax, a borate salt (such as an orthoborate salt, $InBO_3$, $ScBO_3$, $YBO_3$, $LaBO_3$, $Mg_3(BO_3)_2$, or $Co_3(BO_3)_2$), a diborate salt (such as $Mg_2B_2O_5$ or $Co_2B_2O_5$), a metaborate salt (such as $LiBO_2$, $Ca(BO_2)_2$, $NaBO_2$, or $KBO_2$), a tetraborate salt (such as $Na_2B_4O_7.10H_2O$), or a pentaborate salt (such as $KB_5O_8 \cdot 4H_2O$, $Ca_2B_6O_{11} \cdot 7H_2O$ or $CsB_5O_5$).

Among these, in causing a crosslinking reaction rapidly, borax, boric acid or a borate salt is preferable, boric acid is more preferable and it is particularly preferable to employ it in combination with polyvinyl alcohol which is a water-soluble resin.

The crosslinking agent is preferably contained by 0.05 -0.50 parts by mass with respect to 1 part by mass of the water-soluble resin, and more preferably 0.08 -0.30 parts by mass. The crosslinking agent contained within the aforementioned range allows to crosslink the water-soluble resin thereby effectively preventing cracks and the like.

Also a content of the crosslinking agent in the inorganic fine particle dispersion is preferably 0.2 - 2.0 % by mass to the total mass of the inorganic fine particle dispersion, particularly preferably 0.5 - 1.0 % by mass.

In case of employing gelatin as the water-soluble resin, following compounds other than boric acid or boron compound, may also be used as the crosslinking agent. Examples include an aldehyde compound such as formaldehyde, glyoxal, or glutaraldehyde; a ketone compound such as diacetyl or cyclopentanedione; an active halogen compound such as bis(2-chloroethylurea)-2-hydroxy-4,6-dichloro-1,3,5-triazine, or 2,4-dichloro-6-s-triazine sodium salt; an active vinyl compound such as divinylsulfonic acid, 1,3-vinylsulfonyl-2-propanol, N,N'-ethylenebis(vinylsulfonylacetamide) or 1,3,5-triacryloyl-hexahydro-s-triazine; an N-methylol compound such as dimethylolurea or methyloldimethylhidantoin; melamine resin (such as methylolmelamine or alkylated methylolmelamine); epoxy resin; an isocyanate compound such as 1,6-hexamethylene diisocyanate; an aziridine compound described in USP Nos. 3,017,280 and 2,983,611; a carboxyimide compound described in USP No. 3,100,704; an epoxy compound such as glycerol triglycidyl ether; an ethyleneimino compound such as 1,6-hexamethylene-N,N'-bisethyleneurea; a halogenated carboxyaldehyde compound such as mucochloric acid or mucophenoxychloric acid; a dioxane compound such as 2,3-dihydroxydioxane; a metal-containing compound such as titanium lactate, aluminum sulfate, chromium alum, potassium alum, zirconyl acetate or chromium acetate; a polyamine compound such as tetraethylene poentamine; a hydrazide compound such as adipic acid dihydrazide; and a low-molecular weight compound or a polymer containing two or more oxazoline groups. Such crosslinking agent may be employed singly or in a combination of two or more kinds.

- Other additives -

The inorganic fine particle dispersion of the invention may further contain various components such as a water-soluble polymer, a mordant and a surfactant, as other components, employed in an ink-receiving layer included in an ink-jet recording medium to be explained later.

(Ink-jet recording medium)

An ink-jet recording medium of the invention is characterized in being prepared by using the aforementioned inorganic fine particle dispersion of the invention, and preferably includes at least an ink-receiving layer formed by applying, to a support, a coating solution (ink-receiving layer coating solution) including an aforementioned inorganic fine particle dispersion of the invention, a water-soluble resin (and a surfactant, more preferably).

An ink-receiving layer which is a constituent of the ink-jet recording medium of the invention includes at least components of the aforementioned inorganic fine particle dispersion of the invention such as inorganic fine particles and a metal salt, preferably includes a water-soluble resin and a crosslinking agent, and more preferably further includes a surfactant, and may contain a mordant and other additives if necessary. The components constituting the inorganic fine particle dispersion are same as those explained in the foregoing.

The ink jet recording medium of the invention includes a polymer dispersant and a metal salt which are components contained in the inorganic fine particle dispersion, and such components, having also a function of a mordant in an aqueous medium, are effective in improving the resistance to bleeding over time.

-Water-soluble resin -

The ink-receiving layer of the invention preferably includes a water-soluble resin. Examples of the water-soluble resin include a polyvinyl alcohol resin which contains a hydroxyl group as a hydrophilic structural unit (such as polyvinyl alcohol (PVA), acetacetyl-modified polyvinyl alcohol, cation-modified polyvinyl alcohol, anion-modified polyvinyl alcohol, silanol-modified polyvinyl alcohol, or polyvinyl acetal), a cellulose resin (such as methyl cellulose (MC), ethyl cellulose (EC), hydroxyethyl cellulose (HEC), carboxymethyl cellulose (CMC), hydroxypropyl cellulose (HPC), hydroxyethylmethyl cellulose, or hydroxypropylmethyl cellulose), a chitin, a chitosan, starch, an ether bond-containing resin (polyethylene oxide (PEO), polypropylene oxide (PPO), polyethylene glycol (PEG), or polyvinyl ether (PVE)), and a resin having carbamoyl group (such as polyacrylamide (PAAM), polyvinylpyrrolidone (PVP) or polyacrylic acid hydrazide). Also included are a polyacrylic acid salt having a carboxyl group as a dissociable group, a maleic acid resin, an alginate salt, and gelatin. The water-soluble resin can be employed singly or in a combination of two or more kinds.

Among these, the type of the water-soluble resin to be combined with the gas-phase silica is important in consideration of a layer transparency and a coating property, and polyvinyl alcohol resin is particularly preferable.

Examples of the polyvinyl alcohol resin include those described in JP-B Nos. 4-52786, 5-67432, and 7-29479, Japanese Patent No. 2537827, JP-B No. 7-57553, Japanese Patents Nos. 2502998 and 3053231, JP-A No. 63-176173, Japanese Patent No. 2604367, JP-A Nos. 7-276787, 9-207425, 11-58941, 2000-135858, 2001-205924, 2001-287444, 62-278080 and 9-39373, Japanese Patent No. 2750433, JP-A Nos. 2000-158801, 2001-213045, 2001-328345, 8-324105, and 11-348417.

Among these, one having a saponification degree of 90 % or higher, particularly 95 % or higher is preferable. A saponification degree less than 90 % increase the viscosity of the coating solution for the ink-receiving layer, whereby the coating may become difficult and the layer formation may become impossible.

For the purpose of crack prevention, polyvinyl alcohol (PVA) preferably has a number average degree of polymerization of 1,800 or higher, more preferably 2,000 or higher. Also in case of combining with silica fine particles, the type of the water soluble resin is important in consideration of transparency. Particularly in case of employing gas-phase silica, PVA is preferably employed as the water soluble resin, and PVA with a saponification degree of 70 - 99 % is particularly preferable.

The polyvinyl alcohol (PVA) includes a cation-modified polyvinyl alcohol, an anion-modified polyvinyl alcohol, a silanol-modified polyvinyl alcohol and other derivatives of polyvinyl alcohol. Polyvinyl alcohol may be employed singly or in a combination of two or more kinds.

The polyvinyl alcohol resin has a hydroxyl group in a structural unit thereof, and such hydroxyl group forms a hydrogen bond with the surfacial silanol group of the gas-phase silica, thereby stimulating formation of a three-dimensional network structure in which a secondary particle of silica constitutes a unit of the network chain. Such three-dimensional network structure is considered to form an ink-receiving layer of a porous structure having a high void ratio and a sufficient strength. The ink-receiving layer formed in a porous structure as described above can rapidly absorb ink by a capillary action, and can form a dot of a satisfactory circularity without ink bleeding.

In the ink-receiving layer, the water-soluble resin preferably has a content, with respect to the solid (mass) of the ink-receiving layer, of 9 to 40 % by mass, more preferably 12 to 33 % by mass.

The ink-receiving layer is principally constituted of the inorganic fine particles and the water-soluble resin described above, and each of the inorganic fine particles and the water-soluble resin may be a single material or a mixture of plural materials. In case the water-soluble resin is formed by a mixture including the aforementioned polyvinyl alcohol resin and another water-soluble resin, the polyvinyl alcohol resin preferably represents 50 % by mass or higher in the total mass of the water soluble resin, and more preferably 70 % by mass or higher.

-Ratio of contents between inorganic fine particles and water-soluble resin -

The ratio of mass contents between the inorganic fine particles (x) and the water-soluble resin (y) (PB ratio (x/y)) gives great influences to the film structure and film strength of the ink-receiving layer. In other words, when the PB ratio (x/y) becomes greater, the void ratio, pore volume and specific surface area (per unit mass) become greater; however, the density and strength tend to be lowered. More specifically, the PB ratio (x/y) in the ink-receiving layer relating to the invention is preferably set in a range from 1.5 to 10, from the viewpoints of preventing a reduction in the film strength and cracks upon drying due to the excessive PB ratio and of preventing clogging of voids with resin due to the insufficient PB ratio and the subsequent degradation in the ink absorbing property due to the reduction in the void ratio.

The ink-jet recording medium is susceptible to a stress when it passes through the transport system in an ink-jet printer; therefore, it is necessary for the ink-receiving layer to have sufficient film strength, and it is also necessary for the ink-receiving layer to have sufficient film strength from the viewpoint of preventing cracks and peeling in the ink-receiving layer upon cutting the recording medium into a sheet shape. From these viewpoints, the PB ratio is preferably set to not more than 5, and from the viewpoint of maintaining a high-speed ink absorbing property for the ink-jet printer, it is preferably set to not less than 2.

For example, in the case when a coating solution, prepared by completely dispersing gas-phase silica fine particles having an average primary particle size of not more than 20 nm and a water-soluble resin at a PB ratio (x/y) in a range from 2 to 5 in an aqueous solution, is applied to the support and dried, a three-dimensional net-structure with the secondary particle of silica finer particles serving as the net chain is formed so that it is possible to easily form a porous film having a light-transmitting property, which has an average pore size of not more than 30 nm, a void ratio in a range from 50 to 80 %, a pore specific volume of not less than 0.5 ml/g and a specific surface area of not less than 100 $m^2$/g.

With respect to the ink-receiving layer coating solution, a surfactant is preferably contained therein.

With respect to the surfactant, any one of cationic, anionic, nonionic, amphoteric, fluorine-based and silicone-based surfactants may be used. The surfactants may be used singly or in a combination of two or more kinds.

With respect to the nonionic surfactant, examples thereof include: polyoxyalkylene alkyl ethers and polyoxyalkylene alkyl phenyl ethers (for example, diethylene glycol monoethyl ether, diethylene glycol diethyl ether, polyoxyethylene lauryl ether, polyoxyethylene stearyl ether and polyoxyethylene nonylphenyl ether); oxyethylene-oxypropylene block copolymers and sorbitan fatty acid esters (for example, sorbitan monolaurate, sorbitan monoolate and sorbitan triolate); polyoxyethylene sorbitan fatty acid esters (for example, polyoxyethylene sorbitan monolaurate, polyoxyethylene sorbitan monoolate and polyoxyethylene sorbitan triolate); polyoxyethylene sorbitol fatty acid esters (for example, tetraoleic acid polyoxyethylene sorbit); glycerin fatty acid esters (for example, glycerol monoolate); polyoxyethylene glycerin fatty acid esters (for example, monostearic acid polyoxyethylene glycerin and monooleic acid polyoxyethylene glycerin); polyoxyethylene fatty acid esters (for example, polyethylene glycol monolaurate and polyethylene glycol monoolate); and polyoxyethylene alkyl amines and acetylene glycols (for example, 2,4,7,9-tetramethyl-5-decyn-4,7-diol and ethylene oxide adducts and propyleneoxide adducts of the diol). Among these, polyoxyalkylenealkyl ethers are preferably used. The nonionic surfactant may be contained in the ink-receiving layer coating solution.

With respect to the amphoteric surfactant, amino acid-type, carboxy ammonium betaine-type, sulfone ammonium betaine-type, ammonium sulfate betaine-type and imidazolium betaine-type surfactants are proposed, and for example, those surfactants, described in the specification of U.S. Patents No. 3,843,368, Japanese Patent Application Laid-Open Nos. 59-49535, 63-236546, 5-303205, 8-262742, and 10-282619, are preferably used. Among these amphoteric surfactants, amino acid-type amphoteric surfactants are preferably used, and with respect to the amino acid-type amphoteric surfactant, for example, as described in Japanese Patent Application Laid-Open No. 5-303205, N-amino acyl acid and salts thereof, which are formed into derivatives from amino acids (glycine, glutamic acid, histidine, etc.) and to which a long-chain acyl group is introduced, are used.

With respect to the anionic surfactant, examples thereof include: fatty acid salts (for example, sodium stearate and potassium oleate), alkyl sulfates (for example, sodium lauryl sulfate, lauryl triethanol sulfate amine), sulfonates (for example, sodium dodecylbenzene sulfonate), alkyl sulfosaccinates (for example, sodium dioctyl sulfosuccinate), alkyl diphenyl ether disulfonates, and alkyl phosphates.

With respect to the cationic surfactant, examples thereof include: alkyl amine salts, quaternary ammonium salts, pyridinium salts and imidazolium salts.

With respect to the fluorine-based surfactant, compounds obtained through intermediates having a perfluoroalkyl group using a method such as electrolytic fluoridation, telomerization and oligomerization are proposed. Examples thereof include perfluoroalkyl sulfonates, perfluoroalkyl carboxylates, perfluoroalkyl ethylene oxide adducts, perfluoroalkyl trialkyl ammonium salts, oligomers containing a perfluoroalkyl group and perfluoroalkyl phosphates.

With respect to the silicone-based surfactant, silicone oils modified by an organic group are preferably used, and these may have structures in which a side chain of a siloxane structure is modified by an organic group, in which two terminals thereof are modified and in which one terminal thereof is modified. The organic group-modified compounds include amino-modified, polyether-modified, epoxy-modified, carboxyl-modified, carbinol-modified, alkyl-modified, aralkyl-modified, phenol-modified and fluorine-modified compounds.

Among the aforementioned surfactants, in consideration of a stability in viscosity of the coating solution, an amphoteric surfactant is preferable and an amidopropyl type is particularly preferable.

Also in case of utilizing two or more solutions as the coating solution for the ink-receiving layer, it is preferable to add a surfactant in each coating solution.

A content of the surfactant in the ink-receiving layer coating solution is preferably 0.001 - 2.0 % by mass, more preferably 0.01 -1.0 % by mass.

- Other additives -

The recording medium may further contain various known additives such as a mordant, an acid, an ultraviolet absorber, an antioxidant, a fluorescent whitening agent, a monomer, a polymerization initiator, a polymerization inhibitor, an antibleeding agent, an antiseptic agent, a viscosity stabilizer, a defoamer, an antistatic agent, a matting agent, a curl preventing agent, a water resistant agent and a water-soluble organic solvent, according to the necessity.

In the invention, the ink-receiving layer may include a known mordant in addition to the polymer dispersant and the metal salt included in the preparation of the inorganic fine particle dispersion. The mordant, present in the ink-receiving layer, causes an interaction with a liquid ink containing an anionic dye to stabilize the ink, thereby improving the water resistance and the resistance to bleeding over time.

An amount of the mordant contained in the ink-receiving layer of the invention is preferably 0.01 - 5 g/m$^2$, more preferably 0.1 - 3 g/m$^2$.

The ink-receiving layer of the invention may contain an acid. An acid addition regulating the surface pH of the ink-receiving layer to 3 - 8, preferably 3.5 -6.0 allow to improve a yellowing resistance of a white background. The surface pH is measured by a method A for surface pH measurement, determined by J.TAPPI and can be executed for example with a paper surface pH measurement set "Form MPC" manufactured by Kyoritsu Rikagaku Kenkyusho Co., corresponding to such method A.

Specific examples of the acid include formic acid, acetic acid, glycolic acid, oxalic acid, propionic acid, malonic acid, succinic acid, adipic acid, maleic acid, malic acid, tartaric acid, citric acid, benzoic acid, phthalic acid, isophthalic acid, glutaric acid, gluconic acid, lactic acid, aspartic acid, glutamic acid, salicylic acid, a salicylate metal salt (such as of Zn, Al, Ca or Mg), methanesulfonic acid, itaconic acid, benzenesulfonic acid, toluenesulfonic acid, trifluoromethanesulfonic acid, styrenesulfonic acid, trifluoroacetic acid, barbituric acid, acrylic acid, methacrylic acid, cinnamic acid, 4-hydroxybenzoic acid, aminobenzoic acid, naphthalenedisulfonic acid, hydroxybenzenesulfonic acid, toluenesulfinic acid, benzenesulfinic acid, sulfanylic acid, sulfamic acid, α-resorcic acid, β-resorcic acid, γ-resorcic acid, gallic acid, fluoroglycine, sulfosalicylic acid, ascorbic acid, erythorbic acid, bisphenolic acid, hydrochloric acid, nitric acid, sulfuric acid, phosphoric acid, polyphosphoric acid, boric acid, and boronic acid. An amount of addition of such acid can be determined so as to obtain an surface pH of the ink-receiving layer within a range of 3 - 8.

The acid mentioned above may be used in a state of a metal salt (for example of sodium, potassium, calcium, cesium, zinc, copper, iron, aluminum, zirconium, lanthanum, yttrium, magnesium, strontium, or cerium), or an amine salt (for example of ammonia, triethylamine, tributylamine, piperadine, 2-methylpiperadine, or polyallylamine).

In the invention, the ink-receiving layer preferably includes a storability improving agent such as an ultraviolet absorber, an antioxidant, or an antibleeding agent.

Examples of such ultraviolet absorber, antioxidant, and antibleeding agent include an alkylated phenol compound (including a hindered phenol compound), an alkylthiomethylphenol compound, a hydroquinone compound, an alkylated hydroquinone compound, a tocopherol compound, a thiodiphenyl ether compound, a compound having two or more thioether bonds, a bisphenol compound, an O-, N-or S-benzyl compound, a hydroxybenzyl compound, a triazine compound, a phosphonate compound, an acylaminophenol compound, an ester compound, an amide compound, ascorbic acid, an amine antioxidant, a 2-(2-hydroxyphenyl)benzotriazole compound, a 2-hydroxybenzophenone compound, an acrylate, a water-soluble or hydrophobic metal salt, an organometallic compound, a metal complex, a hindered amine compound (including TEMPO compound), a 2-(2-hydroxyphenyl)-1,3,5-triazine compound, a metal deactivating agent, a phosphit compound, a phosphonite compound, a hydroxylamine compound, a nitron compound, a peroxide scavenger, a polyamide stabilizer, a polyether compound, a basic auxiliary stabilizer, a nucleating agent, a benzofuranone compound, an indolinone compound, a phosphin compound, a polyamine compound, a thiourea compound, an urea compound, a hydrazide compound, an amidine compound, a sugar compound, a hydroxybenzoic acid compound, a hydroxybenzoic acid compound, and a trihydroxybenzoic acid compound.

Among these, it is preferable to include at least one of an alkylated phenolic compound, a compound having two or more thioether bonds, a bisphenol compound, ascorbic acid, an amine antioxidant, a water-soluble or hydrophobic metal salt, an organometallic compound, a metal complex, a hindered amine compound, a polyamine compound, a thiourea compound, a hydrazide compound, a hydroxybenzoic acid compound, a dihydroxybenzoic acid compound and a trihydroxybenzoic acid compound.

Specific examples of the compounds are described in JP-A Nos. 2002-307822, 10-182621 and 2001-260519, JP-B Nos. 4-34953 and 4-34513, JP-A No. 11-170686, JP-B No. 4-34512, EP No. 1138509, JP-A Nos. 60-67190, 7-276808, 2001-94829, 47-10537, 58-111942, 58-212844, 59-19945, 59-46646, 59-109055, and 63-53544, JP-B Nos. 36-10466, 42-26187, 48-30492, 48-31255, 48-41572, 48-54965, and 50-10726, USP Nos. 2,719,086, 3,707,375, 3,754,919 and 4,220,711, JP-B Nos. 45-4699 and 54-5324, EP-A Nos. 223739, 309401, 309402, 310551, 310552, and 459416, GP-A No. 3435443, JP-A Nos. 54-48535, 60-107384, 60-107383, 60-125470, 60-125471, 60-125472, 60-287485, 60-287486, 60-287487, 60-287488, 61-160287, 61-185483, 61-211079, 62-146678, 62-146680, 62-146679, 62-282885, 62-262047, 63-051174, 63-89877, 63-88380, 66-88381, 63-113536, 63-163351, 63-203372, 63-224989, 63-251282, 63-267594, 63-182484, 1-239282, 2-262654, 2-71262, 3-121449, 4-291685, 4-291684, 5-61166, 5-119449, 5-188687, 5-188686, 5-110490, 5-1108437, and 5-170361, JP-B Nos. 48-43295 and 48-33212, and USP Nos. 4,814,262 and 4,980,275.

Other components mentioned above may be used singly or in a combination of two or more kinds. Such other components may be added in an aqueous solution, a dispersion, a polymer dispersion, an emulsion or oil drops, or may be incorporated in microcapsules. Such other components preferably have an amount of addition of 0.01 to 10 g/m$^2$.

In the invention, the ink-receiving layer preferably includes a high boiling organic solvent for curl prevention. Such high boiling organic solvent is a water-soluble or hydrophobic organic compound having a boiling point of 150°C or higher under a normal pressure. Such compound may be liquid or solid at the room temperature and may be of a low molecular weight or a high molecular weight.

Specific examples include an aromatic carboxylate ester (such as dibutyl phthalate, diphenyl phthalate or phenyl benzoate), an aliphatic carboxylate ester (such as dioctyl adipate, dibutyl sebacate, methyl stearate, dibutyl maleate, dibutyl fumalate, or triethyl acedtylcitrate), a phosphate ester (such as trioctyl phosphate, or tricresyl phosphate), an epoxy compound (such as epoxylated soybean oil, or epoxylated fatty acid methyl ester), an alcohol (such as stearyl alcohol, ethylene glycol, propylene glycol, diethylene glycol, triethylene glycol, glycerin, diethylene glycol monobutyl ether (DEGMBE), triethylene glycol monobutyl ether, glycerin monomethyl ether, 1,2,3-butanetriol, 1,2,4-butanetriol, 1,2,4-pentanetriol, 1,2,6-hexanetriol, thiodiglycol, triethanolamine, or polyethylene glycol), vegetable oil (such as soybean oil or sunflower oil), and a higher aliphatic carboxylic acid (such as linoleic acid or oleic acid).

In the present invention, the crosslinking agent may be included, as mentioned above, in the inorganic fine particle dispersion, but may also be added, during applying the ink-receiving layer coating solution, to the ink-receiving layer coating solution and/or a coating solution for forming a layer adjacent to the ink-receiving layer, or may be supplied to the ink-receiving layer for example by coating the ink-receiving layer coating solution onto a support which is coated in advance with a coating solution containing the crosslinking agent or by coating and drying an ink-receiving layer coating solution, not containing the crosslinking agent and then overcoating a solution of the crosslinking agent.

In this case, it is preferable, in consideration of the production efficiency, to add the crosslinking agent in the ink-receiving layer coating solution or a coating solution for forming an adjacent layer, thereby supplying the crosslinking agent simultaneously with the formation of the ink-receiving layer. In consideration of improvement in the print density and the glossiness of the image, an addition to the ink-receiving layer coating solution is preferable. In the ink-receiving layer coating solution, the crosslinking agent preferably has a concentration of 0.05 - 10 % by mass, more preferably 0.1 - 7 % by mass.

The crosslinking agent can be preferably provided in the following manner, for example in case of a boron compound. This is achieved, in case the ink-receiving layer is a layer formed by curing by crosslinking a coated layer of a coating solution (first solution), the curing by crosslinking is executed (1) at the same time that the coated layer is formed by applying the coating solution, or (2) during drying of the coated layer formed by coating the aforementioned coating solution and before the coated layer exhibits a decreasing-rate of drying , by applying a basic solution of a pH of 8 or higher (second solution) to such coated layer. The boron compound as the crosslinking agent may be contained in the first solution and/or the second solution. Details will be explained later.

Also the ink-receiving layer coating solution preferably contains a water-soluble organic solvent for the purpose of improving a stability of the coating solution, and improving a handling property by a reduction of the viscosity of the solution. The water-soluble organic solvent is preferable volatile, but the aforementioned high-boiling organic solvent is more preferable as it exhibits an effect of curl prevention.

Examples of the water-soluble organic solvent includes an alcohol such as methanol, ethanol, propanol or butanol; a cyclic alcohol such as cyclohexanol; a ketone such as acetone, methyl ethyl ketone or diethyl ketone; a cellosolve such as ethylene glycol monomethyl ether or ethylene glycol monoethyl ether; an ester such as ethyl acetate, methyl acetate or propyl acetate; a cellosolve ester such as ethylene glycol monomethyl ether acetate or propylene glycol monomethyl ether acetate; and an ordinary organic solvent such as propylene glycol monomethyl ether, propylene glycol monoethyl ether, dimethyl formamide, dimethyl sulfoxide, 2-pyrrolidone, N-methylpyrrolidone, tetrahydrofuran, acetonitrile or toluene. Among these, an alcohol such as methanol or ethanol is preferable because of a satisfactory handling property. An amount of the water-soluble organic solvent is preferably 0.1 -15 % by mass of the total ink-receiving layer coating solution, more preferably 0.5 - 5 % by mass.

-Support-

The description about the support is the same as that given in the producing method for the first inorganic fine particle dispersion, the inorganic fine particle dispersion and image-recording material.

-Preparation of ink jet recording medium-

The ink-jet recording medium of the invention can be advantageously prepared by a process of forming the ink-receiving layer of the medium by adding the crosslinking agent to at least either of an ink-receiving layer coating solution (first solution) containing at least the inorganic fine particles and the water soluble resin and a basic solution (second solution), and utilizing a method (wet-on-wet method) of coating the coating solution (first solution) on a support surface thereby forming a coated layer, and applying the basic solution (second solution) having a pH value of 8 or higher to the coated layer either (1) at the same time that the coated layer is formed by applying the coating solution, or (2) during drying of the coated layer formed by coating the aforementioned coating solution and before the coated layer exhibits a decreasing-rate of drying, and hardening by crosslinking the coated layer.

In the foregoing, the first coating solution, at least containing the inorganic fine particles and the water soluble resin, can be prepared in the invention by mixing the inorganic fine particle dispersion of the invention, prepared by dispersing the inorganic fine particles with the metal salt as described before, and a desired water-soluble resin. Also the crosslinking agent capable of crosslinking the water-soluble resin is included in at least either or both of the first solution and the second solution. The formation of the ink-receiving layer cured by crosslinking by applying the second solution (basic solution) to the first solution by the method (1) or (2) is preferable not only for improving the ink absorbing property and preventing cracks in the film but also for improving an appearance such as cissing.

The ink-receiving layer coating solution of the invention preferably contains further the aforementioned surfactant (particularly an amphoteric surfactant). The surfactant may be included in at least either of the coating solution (first solution) and the basic solution (second solution), but is preferably contained in the basic second solution, for the purpose of effectively preventing repellency to the second solution when the second solution is applied to the coated layer of the first solution. In such case, all the surfactant need not necessarily be contained in the second solution, and it is also effective to include at least a surfactant in the first solution thereby effectively preventing a repellency failure. There is also preferred an embodiment in which a same surfactant is included in the first solution and the second solution.

In case a mordant is contained, such mordant is made effectively present in such a manner that a thickness of a mordant-containing portion from the surface of the ink-receiving layer represents 10 - 60 % of the thickness of the ink-receiving layer. Such structure can be made by any method, for example, (1) a method of forming a coated layer containing the inorganic fine particles, the water soluble resin and the crosslinking agent and coating a mordant-containing solution thereon, or (2) a method of superposed application of a coating solution containing the inorganic fine particles and the water soluble resin and a mordant-containing solution. The mordant-containing solution may also contain inorganic fine particles, a water-soluble resin, a crosslinking agent and the like. In this manner, the mordant is present in a large amount in a predetermined portion of the ink-receiving layer, thereby sufficiently mordanting the ink for ink-jet recording ink thereby improving the color density, preventing the bleeding over time, and improving the gloss of printed portion, the water resistance of the character or the image after printing, and the ozone resistance. A part of the mordant may be contained in a layer initially provided on the support, and, in such case, the mordant applied thereafter may be same or different.

The ink-receiving layer of the invention contains the polymer dispersant and the metal salt, which function as a mordant in an aqueous medium, already in the stage of preparation of the inorganic fine particle dispersion, but a known mordant may be additionally used in combination.

In the following, there will be explained an example of preparation of the first coating solution, for example containing inorganic fine particle dispersion, a water soluble resin and a boron compound (crosslinking agent). It can be prepared by adding gas-phase silica and a water-soluble metal salt to water (for example 10 - 20 % by mass), executing dispersion utilizing a high-speed rotary wet colloid mill (for example Clearmix manufactured by M-Technic Co.) under a high-speed rotating condition for example of 10,000 rpm (preferably 5,000 - 20,000 rpm) and for example for 20 minutes (preferably 10 to 30 minutes) to obtain an inorganic fine particle dispersion, then executing dispersion under same conditions after adding a boron compound (for example 0.5 - 20 % by mass of silica) and executing dispersion under same conditions after adding an aqueous solution of polyvinyl alcohol (for example PVA constituting a mass of about 1/3 of silica). The obtained coating solution is in a uniform sol state, and by coating and drying such coating liquid on a support by a following coating method, there can be obtained a porous ink-receiving layer having a three-dimensional network structure. In the first solution, a pH adjusting agent, another dispersant, a surfactant, a defoamer, an antistatic and the like may be added if necessary.

For the dispersion, there can be employed various dispersers known in the art, such as a high-speed rotary disperser, a medium agitating disperser (such as ball mill or sand mill), an ultrasonic disperser, a colloid mill disperser, or a high pressure disperser, but a medium agitating disperser, a colloid mill disperser, or a high-pressure disperser is preferable for efficiently dispersing generated granulate particles.

The second solution (basic solution) can be prepared by including at least a basic substance (for example ammonia, a primary amine (such as ethylamine or polyallylamine), a secondary amine (such as dimethylamine or triethylamine), a tertiary amine (such as N-ethyl-N-methylbutylamine), a hydroxide of an alkali metal or an alkali earth metal) and/or a salt thereof, and eventually also including a surfactant, a crosslinking agent, a mordant and the like. In the following, an example of preparation of the basic solution as the second solution will be explained.

The second solution can be prepared by adding, to ion-exchanged water, a basic substance (preferably an ammonium salt) and preferably a surfactant (0.01 -1.0 % by mass in total), and, if necessary a crosslinking agent (0 -5.0 % by mass), and a mordant (0.1 -5.0 % by mass) and executing sufficient agitation under a pH regulation (preferably to pH 8.0 or higher). The pH regulation can be executed by including a basic substance, which is preferably an ammonium salt, for example an ammonium salt of an organic acid such as ammonium toluenesulfonate or ammonium acetate, an ammonium salt of an inorganic acid such as ammonium chloride, ammonium sulfate, ammonium phosphate, ammonium hydrogenpohosphate, ammonium carbonate or an aqueous ammonium solution, and in which ammonium carbonate or an aqueous ammonium solution is particularly preferable.

For the preparation of the first and the second solutions, a solvent such as water, an organic solvent or a mixture thereof may be employed. The organic solvent can be an alcohol such as methanol, ethanol, n-propanol, i-proponol, or methoxypropanol, a ketone such as acetone or methyl ethyl ketone, tetrahydrofuran, acetonitrile, ethyl acetate or toluene.

The first solution (ink-receiving layer coating solution) can be coated by a known coating method such as with an extrusion die coater, an air doctor coater, a blade coater, a rod coater, a knife coater, a squeeze coater, a reverse roll coater or a bar coater.

Simultaneous with or after the coating of the first coating solution (ink-receiving layer coating solution), the second solution (basic solution) is applied to the coated layer, and the second solution may be applied before the coated layer exhibits a decreasing rate of drying. More specifically, a preferred manufacture can be attained by introducing the basic solution after the coating of the ink-receiving layer coating solution and while the coated layer shows a constant rate of drying. The second solution may include a mordant.

"Before the coated layer exhibits a decreasing rate of drying" means a period of usually several minutes from immediately after the coating of the ink-receiving layer coating solution, and, during such period, there is shown a "constant rate of drying" phenomenon in which the content of the solvent (dispersing medium) in the coated layer decreases in proportion to time. The period of such "constant rate of drying" is described for example in Chemical Engineering Handbook (pp.707 - 712, published by Maruzen, October 25, 1980).

As described above, after the coating of the first coating solution, the coated layer is dried until it shows a decreasing rate of drying, and such drying is generally executed at 50 - 180°C for 0.5 - 10 minutes (preferably 0.5 - 5 minutes). Such drying time is naturally variable depending on the coating amount, but is generally executed within the aforementioned range.

A method of application of the second solution before the start of a decreasing rate of drying can be (1) a method of coating the second solution on the coated layer, (2)a method of spraying for example with a spray, or (3) a method of immersing the support having the coated layer thereon in the second solution.

In the method (1), the second solution can be applied with a known coating method, such as with a curtain flow coating, an extrusion die coating, an air doctor coating, a blade coating, a rod coating, a knife coating, a squeeze coating, a reverse roll coating, or a bar coating. However, it is preferable to employ a method in which the coater does not contact directly with the already formed first coated layer, such as extrusion die coating, curtain flow coating or bar coating.

A coating amount of the second solution is usually 5 - 50 g/m$^2$, preferably 10 - 30 g/m$^2$.

The second solution, after application, is dried and cured by heating generally at 40 - 180°C for 0.5 - 30 minutes, preferably at 40 - 150°C for 1 - 20 minutes.

Also in case the basic solution (second solution) is applied simultaneously with the coating of the ink-receiving layer coating solution (first solution), the ink-receiving layer can be formed by coating the first and second solutions simultaneously (superposed application) on the support in such a manner that the first solution comes into contact with the support, followed by drying and hardening.

The simultaneous coating (superposed application) can be achieved by a coating method utilizing for example an extrusion die coater or a curtain flow coater. After the simultaneous coating, the coated layers are dried, and such drying is generally executed by heating the coated layers for 0.5 to 10 minutes at 40 to 150°C, preferably for 0.5 to 5 minutes at 40 to 100°C.

In case the simultaneous coating (superposed application) is executed for example with an extrusion die coater, the simultaneously discharged two coating liquids are formed into superposed layers in the vicinity of a discharge port of the extrusion die coater, namely before transfer onto the support, and are coated in superposed manner in such state onto the support. The coating liquids of two layers superposed before coating tends to cause, at the transfer to the support, a crosslinking reaction at the interface of the two liquids, thereby resulting in a mixing of the discharged two liquids and an increase in the viscosity, thus hindering the coating operation. Therefore, in case of the simultaneous coating as explained above, it is preferable, together with the first and second solutions, to provide a barrier layer solution (intermediate layer solution) between the two solutions, thus simultaneously coating three layers.

Such barrier layer solution can be selected without any particular restriction. For example it can be an aqueous solution containing a trace amount of a water-soluble resin, or water. Such water-soluble resin is used for example as a viscosity increasing agent in consideration of the coating property, and can be a cellulose resin (such as hydroxypropylmethyl cellulose, methyl cellulose or hydroxyethylmethyl cellulose), or a polymer such as polyvinylpyrrolidone or gelatin. The aforementioned mordant may also be present in the barrier layer solution.

After the formation of the ink-receiving layer on the support, the ink-receiving layer may be subjected to a calender process in which it is passed through a roll nip in a heat and pressure applied state by using, for example, a super calender, a gloss calender or the like so that the surface smoothness, gloss, transparency and coat-film strength can be improved. However, since the calender process tends to cause a reduction in void ratio (that is, the ink absorbing property tends to lower), it is necessary to set conditions with small lowering in the void ratio upon carrying out the calender process.

Upon carrying out the calender process, the roll temperature is preferably set in a range from 30 to 150°C, preferably, from 40 to 100°C. Moreover, with respect to the line pressure between rolls upon carrying out the calender process, it is preferably set in a range from 50 to 400 kg/cm, more preferably, from 100 to 200 kg/cm.

In the case of ink-jet recording, the layer thickness of the ink-receiving layer needs to be set to provide an absorbing capacity to sufficiently absorb all the droplets; therefore, the layer thickness is determined in association with the void ratio in the layer. For example, supposing that the amount of ink is 8 nL/mm$^2$ with a void ratio of 60 %, the layer thickness needs to be set to approximately not less than 15 $\mu$m. From this point of view, in the case of ink-jet recording, the layer thickness of the ink-receiving layer is preferably set in a range from 10 to 50 $\mu$m.

The pore size of the ink-receiving layer is preferably set in a range from 0.005 to 0.030 $\mu$m, more preferably from 0.01 to 0.25 $\mu$m, in the median diameter. The void ratio and pore median diameter can be measured by using a mercury porosimeter (trade name: "Pore Sizer 9320-PC2" manufactured by Shimadzu Corporation). It is desirable that the ink-receiving layer is excellent in the transparency, and from this point of view, the haze value is set at 30% or less, more preferably, at 20% or less, when the ink-receiving layer is formed on the transparent film support. The haze value can be measured by using a Haze Meter (HGM-2DP; manufactured by Suga Test Instruments Co., Ltd.).

Also the coating of the ink-receiving layer coating solution may be conducted by so-called set drying. In such case, the coating solution is coated, on the support, in a state heated at a temperature of 40°C or higher, then is cooled to a temperature of 15°C or lower to cause gelling (setting) of the coating solution on the support, and a drying air of 50°C or lower is blown to evaporate the solvent such as water thereby forming a porous film. At the drying, for the purpose of preventing cracking of the porous film, it is preferable to regulate the relative humidity at about 50 % in a final stage of the drying. The drying time is not particularly restricted as it is variable depending on the coating amount and the amount of drying air, but is generally executed within a range of 1 - 15 minutes.

EXAMPLES

These examples are intended to be illustrative only and are not intended to limit the scope of the present invention. In the following examples, percentages [%] are by mass unless otherwise indicated.

*Examples of first producing method for inorganic fine particle dispersion, inorganic fine particle dispersion and image recording material*

In the present examples, ink-jet recording sheets on which an ink-receiving layer has been formed are manufactured as examples of an image-recording material (ink-jet recording medium).

- Preparation of support -

A wood pulp made of LBKP (100 parts) was beaten in a double disk refiner to a Canadian standard freeness of 300 ml, and to this were added 0.5 parts of epoxidized behenic acid amide, 0.1 part of anionic polyacrylic amide, 0.1 part of polyamide polyamine epichlorohydrin and 0.5 parts of polyacrylic amide respectively at the absolute dry weight ratio for the pulp, and the resulting mixture was weighed by a fourdrinier machine to provide a base sheet of 170 g/m$^2$. Next, in order to adjust the surface size of the base sheet, 0.04 % of a fluorescent bleaching agent (Whitex BB, manufactured by Sumitomo Chemical Co., Ltd.) was added to a 4 % polyvinyl alcohol aqueous solution, and the above-mentioned base sheet was impregnated with this solution so as to be set at 0.5 g/m$^2$ in the absolute dry weight conversion, and after having been dried, this was subjected to a calender process to obtain a support sheet that was adjusted to a density of 1.05 g/cc.

The wire face (rear surface) of the resulting support sheet was subjected to a corona discharging process, and then coated with high-density polyethylene with a thickness of 19 $\mu$ m through a melt-extruder so that a resin layer having a mat face was formed (hereinafter, this resin layer face is referred to as "rear face"). The resin layer on this rear face was further subjected to a corona discharging process, and a dispersion which had been prepared by dispersing aluminum oxide (Alumina Sol 100; manufactured by Nissan Chemical Industries, Ltd.) and silicon dioxide (Snowtechs O; manufactured by Nissan Chemical Industries, Ltd.) each which served as an antistatic agent, in water at a mass ratio of 1 : 2, was applied to the resulting layer so as to have a dried weight of 0.2 g/m$^2$.

Moreover, after a felt face (surface) on the side that has no resin layer had been subjected to a corona discharging process, low-density polyethylene having an MFR (melt flow rate) of 3.8 that contains 10 % of anatase-type titanium dioxide, a slight amount of ultramarine blue pigment and 0.01 % of a fluorescent whitening agent (with respect to polyethylene) was melt-extruded thereon so as to have a thickness of 29 $\mu$ m by using a melt-extruder; thus, a thermoplastic resin layer with high gloss was formed on the surface side of the support sheet (hereinafter, this high gloss face is referred to as "front face") so that a support was prepared.

(Example 1)

- Preparation of silica dispersion -

The following components were mixed as described below to prepare a silica dispersion of the invention.

To a stainless pot having an inner diameter of 26 cm were added (1) ion exchange water and (2) boric acid, and this was stirred by a dissolver (blade diameter: 6 cm) at the number of revolutions of 1500 rpm until uniformly dissolved; thereafter, to this was added (3) Chemistat 7005 the amount of which corresponded to 1/3 of the total amount to be finally added and mixed at the number of revolutions of 3500 rpm, and to this was uniformly added (4) Reolosil QS-30 the amount of which corresponded to 2/3 of the total amount to be finally added in 5 minutes. At this time, the ratio Dt/It between the added amount Dt of (3) and the added amount of It (4) was 0.1.

Thereafter, to this was further added (5) unused Chemistat 7005 the amount of which corresponded to 2/3 of the total amount to be finally added, and to this was uniformly added (6) unused Reolosil QS-30 the amount of which corresponded to 1/3 of the total amount to be finally added in 15 minutes. Here, the liquid viscosity immediately after the addition was measured as shown in the following evaluation (measurement 1 of liquid viscosity). After completion of the addition of (6) Reolosil QS-30, the resulting mixture was further stirred for 120 minutes to prepare a silica dispersion of the invention. In this case also, the liquid viscosity immediately after the addition was measured as shown in the following evaluation (measurement 2 of liquid viscosity). Here, as described above, the finally added amount D of Chemistat 7005 (dispersant) was 150 g, and the finally added amount I of Reolosil QS-30 (silica fine particles) was 750 g; thus, the ratio D/I of these was set to 0.2.

(Composition)

| | |
|---|---|
| (1) Ion exchange water | 4644.00 g |
| (2) Boric acid (hardening agent) | 30.49 g |
| (3) Chemistat 7005 (40 % aqueous solution) | 50.00 g |
| (Acryl-based cationic polymer; manufactured by Sanyo Chemical Industries, Ltd.) | |
| (4) Reolosil QS-30 | 500.00 g |
| (Silica fine particles, average primary particle size 7 nm; manufactured by Tokuyama Corp.) | |
| (5) Chemistat 7005 (40 % aqueous solution) | 100.00 g |
| (Acryl-based cationic polymer; manufactured by Sanyo Chemical Industries, Ltd.) | |
| (6) Reolosil QS-30 | 250.00 g |
| (Silica fine particles, average primary particle size 7 nm; manufactured by Tokuyama Corp.) | |

-Measurements and evaluation of silica dispersion -

During the preparation processes of the above-mentioned silica dispersion, the following measurements and evaluations were carried out. The results of the measurements and evaluations are shown in Table 1.

a) Measurement 1 of liquid viscosity

Immediately after the addition of Reolosil QS-30 (silica fine particles) the amount of which corresponded to the final added amount I, the viscosity (30°C) thereof was measured by using a B-type viscometer (manufactured by Toki Sangyo Co., Ltd.). Here, the smaller the viscosity of the solution, the more effectively the energy consumption required for the stirring is reduced.

b) Measurement 2 of liquid viscosity

Immediately after the stirring process for 120 minutes succeeding to the addition of Reolosil QS-30 (silica fine particles) the amount of which corresponded to the final added amount I, the viscosity (30°C) thereof was measured by using a B-type viscometer (manufactured by Toki Sangyo Co., Ltd.). Here, the smaller the viscosity of the solution, the more effectively the energy consumption required for the stirring is reduced.

c) Foaming of the solution

During the addition of Reolosil QS-30 (silica fine particles), foaming of the solution was visually observed, and evaluated in accordance with the following criteria.

A: Although foaming was slightly observed, the generation of foaming was virtually suppressed.
B: The generation of the foaming was recognized a little.
C: The generation of the foaming was abundantly recognized.

- Preparation of ink-receiving layer coating solution -

The silica dispersion, obtained through the above-mentioned processes, was subjected to a finely dispersing process by using a DYNO-mill KDL-PILOT. The finely dispersing process was carried out while being cooled with cooling water at 5°C, under the conditions of a filling rate of zirconia beads (diameter 0.65 mm) of 70 %, a peripheral speed of 8 m/min and a flow rate of 590 g/min, through batch processes of two times. After the silica dispersion thus obtained had been stored for 24 hours at 30°C, to 986.5 g of the silica dispersion were added and mixed 95.7 g of ion exchange water, 430.8 g of the following (7) water-soluble resin aqueous solution, 12.67 g of the following (8) surfactant and 7.7 g of the following (9) surfactant to prepare an ink-receiving layer coating solution.

(7) Water-soluble resin aqueous solution

After the following components had been mixed, the mixture was heated to 95°C for 180 minutes, and then cooled to 30°C to prepare a water-soluble resin aqueous solution.

| Ion exchange water | 1367.17 g |
| Polyoxyethylene oleyl ether | 1.28 g |
| (Emulgen 109P; surfactant; manufactured by Kao Corporation) | |
| Diethylene glycol monobutyl ether | 16.65 g |
| Polyvinyl alcohol | 100.75 g |
| (PVA124; manufactured by Kuraray Co., Ltd.) | |
| Hydroxypropyl cellulose | 5.67 g |
| (HPC-SSL; manufactured by Nippon Soda Co., Ltd.) | |
| (8) Polyoxyethylene oleyl ether | |
| (Emulgen 109P; surfactant; manufactured by Kao Corporation) | |
| (9) Megface F-1405 (10 % solution) | |
| (Fluorine surfactant; manufactured by Dainippon Ink and Chemicals, Inc.) | |

-Preparation of ink-jet recording sheet -

After the front face of the above-mentioned support had been subjected to a corona discharging process, the ink-receiving layer coating solution thus obtained was applied to the front face of the support by using an extrusion die coater at a coating amount of 170 ml/m$^2$, and dried by using a hot-air dryer at a temperature of 40°C (wind speed 5 m/sec) until the solid component density of the coated layer had become 18 %. During this period, the coated layer was in a constant rate of drying. Immediately after this process, the resulting sheet was immersed in a basic solution (pH 9.6) having the following composition so that the basic solution was allowed to adhere to the coated layer at a rate of 20 g/m$^2$, and this was then dried at 80°C for 10 minutes. Thus, an ink-jet-recording sheet of the invention with an ink-receiving layer having a dried film thickness of 35 $\mu$ m was obtained.

| Composition of basic solution | |
| Boric acid (cross-linking agent, 100 %) | 6.5 g |
| Ion exchange water | 723.5 g |
| Basic mordant | 150 g |
| (PAA-03 (20 % aqueous solution); manufactured by Nitto Boseki Co., Ltd.) | |
| Surface pH adjusting agent (ammonium chloride, 100 %) | 1.0 g |
| Surface pH adjusting agent (p-toluene sulfonic acid, 100 %) | 18.0 g |
| Polyoxyethylene oleyl ether | 100.0 g |
| (Emulgen 109P; surfactant; manufactured by Kao Corporation) | |
| Megface F-1405 (10 % solution) | 2.0 g |
| (Fluorine surfactant; manufactured by Dainippon Ink and Chemicals, Inc.) | |

As described above, the ink-jet recording sheet, obtained by using a silica dispersion having a superior dispersing property of silica fine particles, had a good surface state without defects such as granular dots on the coated surface. Moreover, an image-receiving sheet with high gloss, which had such a high maximum density Dm that the black density after the ink-jet recording process was sufficiently exerted, was obtained. Since the dispersing property of the inorganic fine particles was improved, it was possible to use smaller-size inorganic fine particles, and consequently to further improve the surface properties.

(Example 2)

The same processes as those of Example 1 were carried out except that, in "preparation of silica dispersion" of Example 1, the added amounts of the silica fine particles and the dispersant were changed so that the ratio Dt/It between the added amount Dt of (3) Chemistat 7005 and the added amount It of (4) Reolosil QS-30 was set to 0.15; thus, a silica dispersion was prepared, and this was evaluated in the same manner as described earlier, and an ink-receiving layer coating solution was prepared and an ink-jet recording sheet was formed. The results of measurements and evaluation are shown in Table 1.

- Preparation of silica dispersion -

To a stainless pot having an inner diameter of 26 cm were added (1) ion exchange water and (2) boric acid, and this was stirred by a dissolver (blade diameter: 6 cm) at the number of revolutions of 1500 rpm until uniformly dissolved; thereafter, to this was added (3) Chemistat 7005 the amount of which corresponded to 1/2 of the total amount to be finally added and mixed at the number of revolutions of 3500 rpm, and to this was uniformly added (4) Reolosil QS-30 the amount of which corresponded to 2/3 of the total amount to be finally added in 5 minutes. At this time, the ratio Dt/It was 0.15. Thereafter, to this was further added (5) unused Chemistat 7005 the amount of which corresponded to 1/2 of the total amount to be finally added, and to this was uniformly added (6) unused Reolosil QS-30 the amount of which corresponded to 1/3 of the total amount, in 15 minutes. After completion of the addition of (6) Reolosil QS-30, the resulting mixture was further stirred for 120 minutes to prepare a silica dispersion of the invention. In the above-mentioned processes, the liquid viscosity immediately after the addition and the liquid viscosity after the stirring process were measured. Here, the final added amount D of Chemistat 7005 (dispersant) was 150 g and the final added amount I of Reolosil QS-30 (silica fine particles) was 750 g, with the ratio D/I being set to 0.2.

| | |
|---|---|
| (1) Ion exchange water | 4644.00 g |
| (2) Boric acid (hardening agent) | 30.49 g |
| (3) Chemistat 7005 (40 % aqueous solution) | 75.00 g |
| (Acryl-based cationic polymer; manufactured by Sanyo Chemical Industries, Ltd.) | |
| (4) Reolosil QS-30 | 500.00 g |
| (Silica fine particles, average primary particle size 7 nm; manufactured by Tokuyama Corp.) | |
| (5) Chemistat 7005 (40 % aqueous solution) | 75.00 g |
| (Acryl-based cationic polymer; manufactured by Sanyo Chemical Industries, Ltd.) | |
| (6) Reolosil QS-30 | 250.00 g |
| (Silica fine particles, average primary particle size 7 nm; manufactured by Tokuyama Corp.) | |

The resulting ink-jet recording sheet had a good surface state without defects such as granular dots on the coated surface. Moreover, an image-receiving sheet with high gloss, which had such a high maximum density Dm that the black density after the ink-jet recording process was sufficiently exerted, was obtained. Since the dispersing property of the inorganic fine particles was improved, it was possible to use smaller-size inorganic fine particles, and consequently to further improve the surface state.

(Example 3)

After a dispersant mixed solution as shown below had been prepared, the same processes as those of Example 1 were carried out except that, in "preparation of silica dispersion" of Example 1, the added amounts of the silica fine particles and the dispersant were adjusted by using the dispersant mixed solution so that the ratio Dt/It was set to 0.1; thus, a silica dispersion was prepared, and this was evaluated in the same manner as described earlier, and an ink-receiving layer coating solution was prepared and an ink-jet recording sheet was formed. The results of measurements and evaluation are shown in Table 1.

-Preparation of dispersant mixed solution-

Chemistat 7005 (40 % aqueous solution; acryl-based cationic polymer; manufactured by Sanyo Chemical Industries, Ltd.)(525.00 g) and Zircosole ZA-30 (zirconium ammonium carbonate (water-soluble metal salt); manufactured by Daiichi Kigenso Kagaku Kogyo Co., Ltd.)(164.00 g) were mixed to prepare a dispersant mixed solution.

-Preparation of silica dispersion-

To a stainless pot having an inner diameter of 26 cm were added (1) ion exchange water and (2) boric acid, and this was stirred by a dissolver (blade diameter: 6 cm) at the number of revolutions of 1500 rpm until uniformly dissolved; thereafter, to this was added (3) the dispersant mixed solution (amount of Chemistat 7005: 50.00 g) the amount of which corresponded to 1/3 of the total amount to be finally added and mixed at the number of revolutions of 3500 rpm, and to this was uniformly added (4) Reolosil QS-30 the amount of which corresponded to 2/3 of the total amount to be finally added, in 5 minutes. At this time, the ratio Dt/It between the added amount Dt of (3) and the added amount It of (4) was 0.1. Thereafter, to this was further added (5) the dispersant mixed solution (amount of Chemistat 7005: 100.00 g) the amount of which corresponded to 2/3 of the total amount, and to this was uniformly added (6) unused Reolosil QS-30 the amount of which corresponded to 1/3 of the total amount in 15 minutes. After completion of the addition of (6) Reolosil QS-30, the resulting mixture was further stirred for 120 minutes to prepare a silica dispersion of the invention. In the above-mentioned processes, the liquid viscosity immediately after the addition and the liquid viscosity after the stirring process (30°C) were measured. Here, the final added amount D of Chemistat 7005 (dispersant) was 150 g (with the total amount of the dispersant mixed solution being set to 196.86 g) and the final added amount I of Reolosil QS-30 (silica fine particles) was 750 g, with the ratio D/I being set to 0.2.

| | |
|---|---|
| (1) Ion exchange water | 4447.65 g |
| (2) Boric acid (hardening agent) | 30.49 g |
| (3) Dispersant mixed solution | 65.62 g |
| (4) Reolosil QS-30 | 500.00 g |
| (Silica fine particles, average primary particle size 7 nm; manufactured by Tokuyama Corp.) | |
| (5) Dispersant mixed solution | 131.24 g |
| (4) Reolosil QS-30 | 250.00 g |
| (Silica fine particles, average primary particle size 7 nm; manufactured by Tokuyama Corp.) | |

The resulting ink-jet recording sheet had a good surface state without defects such as granular dots on the coated surface. Moreover, an image-receiving sheet with high gloss, which had such a high maximum density Dm that the black density after the ink-jet recording process was sufficiently exerted, was obtained. Since the dispersing property of the inorganic fine particles was improved, it was possible to use smaller-size inorganic fine particles, and consequently to further improve the surface state.

(Comparative Example 1)

The same processes as those of Example 1 were carried out except that, in "preparation of silica dispersion" of Example 1, the added amount Dt of (3) Chemistat 7005 and the added amount It of (4) Reolosil QS-30 were changed so that the ratio Dt/It was set to 0.2 (= D/I); thus, a silica dispersion was prepared, and this was evaluated in the same manner as described earlier. The results of measurements and evaluation are shown in Table 1. Moreover, an ink-receiving layer coating solution was prepared in the same manner as Example 1 so that an ink-jet recording sheet was formed.

- Preparation of silica dispersion -

To a stainless pot having an inner diameter of 26 cm were added (1) ion exchange water and (2) boric acid, and this was stirred by a dissolver (blade diameter: 6 cm) at the number of revolutions of 1500 rpm until uniformly dissolved; thereafter, to this was added (3) Chemistat 7005 the amount of which corresponded to 2/3 of the total amount to be finally added and mixed at the number of revolutions of 3500 rpm, and to this was uniformly added (4) Reolosil QS-30 the amount of which corresponded to 2/3 of the total amount to be finally added, in 5 minutes. At this time, the ratio Dt/It was 0.2. Thereafter, to this was further added (5) unused Chemistat 7005 the amount of which corresponded to 1/3 of the total amount, and to this was uniformly added (6) unused Reolosil QS-30 the amount of which corresponded to 1/3 of the total amount, in 15 minutes. After completion of the addition of (6) Reolosil QS-30, the resulting mixture was further stirred for 120 minutes to prepare a silica dispersion of the invention. In the above-mentioned processes, the liquid viscosity immediately after the addition and the liquid viscosity after the stirring process were measured. Here, in the same manner as Example 1, the ratio D/I was 0.2.

| | |
|---|---|
| (1) Ion exchange water | 4644.00 g |
| (2) Boric acid (hardening agent) | 30.49 g |
| (3) Chemistat 7005 (40 % aqueous solution) | 100.00 g |
| (Acryl-based cationic polymer; manufactured by Sanyo Chemical Industries, Ltd.) | |
| (4) Reolosil QS-30 | 500.00 g |
| (Silica fine particles, average primary particle size 7 nm; manufactured by Tokuyama Corp.) | |
| (5) Chemistat 7005 (40 % aqueous solution) | 50.00 g |
| (Acryl-based cationic polymer; manufactured by Sanyo Chemical Industries, Ltd.) | |
| (6) Reolosil QS-30 | 250.00 g |

(continued)

(Silica fine particles, average primary particle size 7 nm; manufactured by Tokuyama Corp.)

(Comparative Example 2)

The same processes as those of Example 1 were carried out except that, in "preparation of silica dispersion" of Example 1, the adding processes of the silica fine particles and the dispersant were changed so that the total amount of the dispersant was added prior to the addition of the silica fine particles without being added in a divided manner and the silica fine particles were then added thereto; thus, a silica dispersion was prepared, and this was evaluated in the same manner as described earlier. The results of measurements and evaluation are shown in Table 1. Moreover, an ink-receiving layer coating solution was prepared in the same manner as Example 1 so that an ink-jet recording sheet was formed.

- Preparation of silica dispersion -

To a stainless pot having an inner diameter of 26 cm were added (1) ion exchange water and (2) boric acid, and this was stirred by a dissolver (blade diameter: 6 cm) at the number of revolutions of 1500 rpm until uniformly dissolved; thereafter, to this was added (3) Chemistat 7005 (all the amount of the total amount to be finally added) and mixed at the number of revolutions of 3500 rpm, and to this was uniformly added (4) Reolosil QS-30 the amount of which corresponded to 2/3 of the total amount to be finally added, in 5 minutes. At this time, the ratio Dt/It was 0.3. Thereafter, to this was further added (5) Reolosil QS-30 the amount of which corresponded to 1/3 of the total amount, in 15 minutes, and the resulting mixture was further stirred for 120 minutes to prepare a silica dispersion of the invention. In the above-mentioned processes, the liquid viscosity immediately after the addition and the liquid viscosity after the stirring process were measured. Here, in the same manner as Example 1, the ratio D/I was 0.2.

| | |
|---|---|
| (1) Ion exchange water | 4644.00 g |
| (2) Boric acid (hardening agent) | 30.49 g |
| (3) Chemistat 7005 (40 % aqueous solution) | 150.00 g |
| (Acryl-based cationic polymer; manufactured by Sanyo Chemical Industries, Ltd.) | |
| (4) Reolosil QS-30 | 500.00 g |
| (Silica fine particles, average primary particle size 7 nm; manufactured by Tokuyama Corp.) | |
| (5) Reolosil QS-30 | 250.00 g |
| (Silica fine particles, average primary particle size 7 nm; manufactured by Tokuyama Corp.) | |

(Comparative Example 3)

The same processes as those of Example 3 were carried out except that the adding processes of the silica fine particles and the dispersant were changed so that the total amount of the dispersant mixed solution was added prior to the addition of the silica fine particles without being added in a divided manner and the silica fine particles were then added thereto; thus, a silica dispersion was prepared, and this was evaluated in the same manner as described earlier. The results of measurements and evaluation are shown in Table 1. Moreover, an ink-receiving layer coating solution was prepared in the same manner as Example 1 so that an ink-jet recording sheet was formed.

- Preparation of silica dispersion -

To a stainless pot having an inner diameter of 26 cm were added (1) ion exchange water and (2) boric acid, and this was stirred by a dissolver (blade diameter: 6 cm) at the number of revolutions of 1500 rpm until uniformly dissolved; thereafter, to this was added (3) the dispersant mixed solution (all the amount of the total amount to be finally added; in which 150 g of Chemistat 7005 was contained) and mixed at the number of revolutions of 3500 rpm, and to this was uniformly added (4) Reolosil QS-30 the amount of which corresponded to 2/3 of the total amount to be finally added, in 5 minutes. At this time, the ratio Dt/It was 0.3. Thereafter, to this was uniformly added (5) Reolosil QS-30 the amount of which corresponded to 1/3 of the total amount, in 15 minutes. After the addition of the Reolosil QS-30, the resulting mixture was further stirred for 120 minutes to prepare a silica dispersion. In the above-mentioned processes, the liquid viscosity immediately after the addition and the liquid viscosity after the stirring process were measured. Here, in the same manner as Example 1, the ratio D/I was 0.2.

| | | |
|---|---|---|
| (1) Ion exchange water | | 4447.65 g |
| (2) Boric acid (hardening agent) | | 30.49 g |
| (3) Dispersant mixed solution | | 196.86 g |
| (4) Reolosil QS-30 | | 500.00 g |

(Silica fine particles, average primary particle size 7 nm; manufactured by Tokuyama Corp.)

| | | |
|---|---|---|
| (5) Reolosil QS-30 | | 250.00 g |

(Silica fine particles, average primary particle size 7 nm; manufactured by Tokuyama Corp.)

Table 1

| | Ion exchange water | Boric acid | Dispersant (*1) | Dispersant mixed solution (*2) | Silica (*3) | Dispersant (*1) | Dispersant mixed solution (*2) | Silica (*3) | Liquid viscosity [measurement 1] | Liquid viscosity [measurement 2] | Foaming |
|---|---|---|---|---|---|---|---|---|---|---|---|
| Example 1 | 4644.00 | 30.49 | 50.00 | — | 500.00 | 100.00 | — | 250.00 | 439 | 185 | A |
| Example 2 | 4644.00 | | 75.00 | — | | 75.00 | — | | 512 | 200 | A |
| Example 3 | 4447.65 | | — | 65.62 | | — | 131.24 | | 1004 | 192 | A |
| Comparative Example 1 | 4644.00 | | 100.00 | — | | 50.00 | — | | 770 | 232 | B |
| Comparative Example 2 | 4644.00 | | 150.00 | — | | — | — | | 1084 | 275 | C |
| Comparative Example 3 | 4447.65 | | | 196.86 | | — | — | | 1372 | 197 | C |

*1: Chemistat 7005 (40 % aqueous solution) manufactured by Sanyo Chemical Industries, Ltd.

*2: Mixed solution of Chemistat 7005 and Zircosole ZA-30 (zirconium ammonium carbonate; manufactured by Daiichi Kigenso Kagaku Kogyo Co., Ltd.)

*3: Reolosil QS-30; manufactured by Tokuyama Corp.

As indicated by the above-mentioned Table 1, in the Examples in which the silica dispersion was prepared through adding processes under conditions in which the rate of added amounts (Dt/It) of the dispersant and the silica fine particles upon addition was smaller than the rate of the total amounts (D/I) of the dispersant and the silica fine particles to be finally added, it was possible to greatly reduce the viscosity of the prepared solution, and consequently to easily carry out the preparation processes with energy consumption being reduced to a low level. Moreover, it became possible to suppress the generation of foaming to a low level upon preparation. Furthermore, the ink receiving layer (coated face) had a good surface state.

In contrast, in Comparative Examples in which the adding processes were carried out under conditions in which the rate of amounts Dt/It was not below the rate of amounts D/I, the liquid viscosity had a great increase, with degradation in terms of energy consumption in comparison with the Examples, and the degree of foaming was also greater. The ink receiving layer (coated face) was inferior in the surface state in comparison with the Examples.

*Examples for Second producing method of inorganic fine particle dispersion, inorganic fine particle dispersion and ink-jet recording medium*

(Example 4)

Preparation of ink-receiving layer coating solution

-Preparation of inorganic fine particle dispersion -

An inorganic fine particle dispersion of the invention was prepared in the following manner.

In a stainless steel pot of an internal diameter of 26 cm, (1) 4596.65 g of ion-exchanged water and (2) 30.49 g of a crosslinking agent (boric acid) were added and were agitated until uniform dissolution with a dissolver (blade diameter 6 cm) with a revolution of 1500 rpm, then (3) a dispersant mixture solution prepared in advance of a following formulation was added in an amount of 65.62 g which corresponds to 1/3 of a total amount to be finally added and the revolution was changed to 3500 rpm. Then (4) gas-phase silica (Reolosil QS-30, average primary particle size 7 μm, BET specific surface area 300 m$^2$/g, manufactured by Tokuyama Corp.; inorganic fine particles) was added in an amount of 500.00 g which corresponds to 2/3 of the total amount to be finally added, uniformly over 5 minutes. Subsequently, (5) 131.24g of the dispersant mixture solution, which is an unadded amount corresponding to 2/3 of the total amount, were added, and (6) 250.00 g of gas-phase silica, which is an unadded amount corresponding to 1/3 of the total amount, were added uniformly over 15 minutes. Thereafter the agitation was conducted for further 120 minutes to obtain a silica fine particle slurry.

The obtained silica fine particle slurry was treated once by a high pressure homogenizer to obtain an inorganic fine particle dispersion of a solid content of 15.3 %. Composition of dispersant mixture solution

| | |
|---|---|
| Polymer dispersant (Chemistat 7005, 40 % aqueous solution, acrylic cationic polymer; manufactured by Sanyo Chemical Industries, Ltd.) | 150.00 g |
| Water-soluble metal salt (Zircosol ZA-30, manufactured by Daiichi Kigenso Kagaku Kogyo Co., Ltd.) | 46.86 g |

- Viscosity measurement -

The inorganic fine particle dispersion was subjected to a measurement of a viscosity η in the following manner. Results of measurement are shown in Table 2.

The viscosity η was measured, after agitation for 120 minutes in the aforementioned dissolver treatment, with a B-type viscometer (manufactured by Toki Sangyo Co.) in a state where the inorganic fine particle dispersion was maintained at a temperature of 30°C. A lower solution viscosity is favorable for reducing the energy required for agitation.

-Preparation of ink-receiving layer coating solution -

The inorganic fine particle dispersion obtained above was subjected to a fine dispersion process in a DYNO mill KDL-PILOT. The fine dispersion process was conducted by repeating a batch process twice under conditions of a fill rate 70 % of zirconia beads of a diameter of 0.65 mm, a peripheral speed of 8 m/min, and a flow rate of 590 g/min and under cooling with water of 5°C. The inorganic fine particle dispersion thus obtained was stored for 24 hours at 30°C, and to 986.5 g of the inorganic fine particle dispersion, there were added 95.7 g of ion-exchanged water, (7) 430.8 g of an aqueous solution of a water-soluble resin, (8) 12.67 g of a surfactant (polyoxyethyleneoleyl ether, Emulgen 109P, manufactured by Kao Corp.) and (9) 7.7 g of a surfactant (fluorinated surfactant, Megaface F-1405 (10% solution), manufactured by Dai-Nippon Inks and Chemicals Inc.) to obtain an ink-receiving layer coating solution. Aqueous solution of water soluble resin

Following composition was mixed then heated for 180 minutes at 95°C and cooled to 30°C to obtain an aqueous solution of water-soluble resin:

| Ion-exchanged water | 1367.17 g |
| Polyoxyethyleneoleyl ether (Emergen 109P, manufactured by Kao Corp., surfactant) | 1.28 g |
| Diethylene glycol monobutyl ether | 16.65 g |
| Polyvinyl alcohol (PVA 124, manufactured by Kuraray Co.) | 100. 75 g |
| Hydroxypropyl cellulose (HPC-SSL, manufacture by Nippon Soda Co.) | 5.67 g |

Preparation of ink-jet recording medium

-Preparation of support -

A support was prepared in the same manner as in "Examples of first producing method for inorganic fine particle dispersion, inorganic fine particle dispersion and image recording material".

-Preparation of ink-jet recording medium -

The support obtained above was subjected, on a front surface thereof, to a corona discharge treatment, and the aforementioned ink-receiving layer coating solution was coated by an extrusion die coater with a coating amount of 170 ml/m² on the front surface of the support and dried in a hot air dryer at 40°C (air speed 5 m/sec) until the coated layer reached a solid concentration of 18 %. The coated layer showed a constant rate of drying during such period. Immediately thereafter, it was immersed in a basic solution (pH 9.6) of a following composition to apply the solution by 20 g/m² on the coated layer, and was dried for 10 minutes at 80°C thereby preparing an ink-jet recording medium of Example 4, having an ink receiving layer of a dry thickness of 35 μm. The ink-jet recording medium thus obtained showed a satisfactory surface state without defects such as granular dots on the coated surface. Also it was a high density recording medium showing a high gloss and capable providing a sufficient black density after ink-jet recording.

| Composition of basic solution | |
| Crosslinking agent (boric acid, 100 %) | 6.5 g |
| Ion-exchanged water | 723.5 g |
| Basic mordant (PAA-03 (20% aqueous solution), manufactured by Nitto Boseki Co., Ltd.) | 150 g |
| Surface pH adjusting agent (ammonium chloride, 100 %) | 1.0 g |
| Surface pH adjusting agent (p-toluenesulfonic acid, 100 %) | 18.0 g |
| Polyoxyethyleneoleyl ether (2 % solution) (Emulgen 109P, manufactured by Kao Corp., surfactant) | 100.0 g |
| Megaface F-1405 (100 %, manufactured by Dai-Nippon Inks and Chemicals Inc., fluorinated surfactant) | 2.0 g |

-Evaluation of bleeding over time-

On thus obtained ink-jet recording medium, a grid line pattern (line width 0.28 mm) with magenta ink and black ink in adjacent positions was printed with an ink-jet printer (PM-970C, manufactured by Seiko Epson Co.) and a visual density was measured with X-lite 310TR (manufactured by X-lite Inc.). The print was let to stand for 3 hours, then stored for 1 day in a thermostat chamber of 40°C and a relative humidity of 90 % and again subjected to the measurement of the visual density, and a variation (%) of the density to the initial density was evaluated. The bleeding over time is lower as the variation of the density to the initial density is smaller.

$$\text{variation (\%) of density to initial density} = (\text{density after storage} - \text{initial density})/\text{initial density} \times 100\ (\%).$$

Results are shown in Table 2.

(Example 5)

An inorganic fine particle dispersion, prepared in the same manner as in Example 4 except that the amount of ion-exchanged water used in the preparation of the inorganic fine particle dispersion was changed from 4596.6 g to 4447.65 g, was subjected to a measurement of viscosity η and used for preparing an ink receiving layer coating solution, which was used for obtaining an ink-jet recording medium of Example 5. The ink-jet recording medium thus obtained showed a satisfactory surface state without defects such as granular dots on the coated surface. Also it was a high density recording medium showing a high gloss and capable of providing a sufficient black density after ink-jet recording. It also showed a satisfactory property with low bleeding over time as shown in Table 2. The solid content and viscosity η of the inorganic fine particle dispersion and the result of evaluation of the bleeding over time are shown in Table 2.

(Comparative Example 4)

An inorganic fine particle dispersion, prepared in the same manner as in Example 4 except that the amount of ion-exchanged water used in the preparation of the inorganic fine particle dispersion was changed from 4596.6 g to 4643.51 g and that 196.86 g of the dispersant mixture solution was replaced by 150.00 g of a polymer dispersant (Chemistat 7005), was subjected to a measurement of viscosity η and used for preparing an ink receiving layer coating solution, which was used for obtaining an ink-jet recording medium of Comparative Example 4, and the bleeding over time was evaluated. The solid content and viscosity η of the inorganic fine particle dispersion and the result of evaluation of the bleeding over time are shown in Table 2.

(Comparative Example 5)

An inorganic fine particle dispersion, prepared in the same manner as in Comparative Example 1 except that the amount of ion-exchanged water used in the preparation of the inorganic fine particle dispersion in Comparative Example 4 was changed from 4643.51 g to 4494.51 g, was subjected to a measurement of viscosity η and used for preparing an ink receiving layer coating solution, which was used for obtaining an ink-jet recording medium of Comparative Example 5, and the bleeding over time was evaluated. The solid content and viscosity η of the inorganic fine particle dispersion and the result of evaluation of the bleeding over time are shown in Table 2.

Table 2

|  | Example 4 | Example 5 | Comparative Example 4 | Comparative Example 5 |
|---|---|---|---|---|
| Ion exchange water | 4596.65 | 4447.65 | 4643.51 | 4494.51 |
| Boric acid (Cross-linking agent) | 30.49 | 30.49 | 30.49 | 30.49 |
| Dispersant mixed solution | 196.86 | 196.86 | - | - |
| Chemistat 7005 (High molecular weight dispersant) | - | - | 150.00 | 150.00 |
| Reolosil QS-30* (Inorganic fine particles) | 750.00 | 750.00 | 750.00 | 750.00 |
| Solid component ratio | 15.3% | 15.8% | 15.1% | 15.5% |
| Liquid viscosity η | 135 | 197 | 224 | 253 |
| Bleeding over time | 40% | 40% | 50% | 50% |

As shown in Table 2, the inorganic fine particle dispersions of Examples, in which a metal salt was added in the preparation of the inorganic fine particle dispersion, provided a stable dispersion and could effectively lower the viscosity.
Also in the ink-jet recording media of Examples containing a metal salt, since the ink receiving layer was formed by coating an ink receiving layer coating solution utilizing such inorganic fine particle dispersion, the bleeding over time of the ink could be effectively reduced.
On the other hand, the inorganic fine particle dispersions of Comparative Examples, in which a metal salt was not added in the preparation of the inorganic fine particle dispersion, could not provide a stable dispersion thus resulting in a high viscosity.
Also in the ink-jet recording media of Comparative Examples not containing a metal salt, as the ink receiving layer was formed by coating an ink receiving layer coating solution utilizing such inorganic fine particle dispersion, an evident bleeding over time was generated.

The invention provides a producing method for an inorganic fine particle dispersion that is capable of suppressing an increase in viscosity upon dispersion of inorganic fine particles and uniformly dispersing inorganic fine particles with low energy consumption, and an inorganic fine particle dispersion with low viscosity in which inorganic fine particles are uniformly dispersed. Moreover, it becomes possible to provide an image-recording material (in particular, an ink-jet recording medium) that is easily manufactured, has a good surface state on an ink-receiving face, and is less susceptible to image changes such as bleeding over time.

**Claims**

1. A method for producing an inorganic fine particle dispersion comprising adding inorganic fine particles to an aqueous medium containing at least water, a polymer dispersant and a metal salt, and then executing a dispersion process.

2. A method for producing an inorganic fine particle dispersion according to Claim 1, wherein the metal salt is a water-soluble metal salt.

3. A method for producing an inorganic fine particle dispersion according to Claim 1 or Claim 2, wherein the inorganic fine particles are silica fine particles.

4. A method for producing an inorganic fine particle dispersion according to any preceding claim, wherein the polymer dispersant is an acrylic cationic polymer containing an aromatic group, or polydiallyldimethylammonium chloride.

5. A method for producing an inorganic fine particle dispersion according to any preceding claim, wherein the water-soluble metal salt is a zirconium compound.

6. A method for producing an inorganic fine particle dispersion according to any preceding claim, wherein the aqueous medium further contains a crosslinking agent.

7. An inorganic fine particle dispersion obtainable by the method for producing an inorganic fine particle dispersion according to any preceding claim.

8. An ink-jet recording medium comprising an ink-receiving layer formed by applying, to a support, a coating solution prepared by using the inorganic fine particle dispersion according to Claim 7.

# F I G. 1

Europäisches
Patentamt

European
Patent Office

Office européen
des brevets

# EUROPEAN SEARCH REPORT

Application Number

EP 09 01 1987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/094420 A1 (HATANO OSAMU [JP] ET AL) 18 July 2002 (2002-07-18) * paragraph [0035] - paragraph [0143] * * example 2 * | 1-8 | INV. C09C1/30 C09C3/08 C09C3/10 G03C1/95 B41M5/52 |
| X | JP 06 032046 A (NEW OJI PAPER CO LTD) 8 February 1994 (1994-02-08) * abstract * * paragraphs [0006] - [0041] * | 1-8 | |
| X,P | EP 1 484 189 A2 (FUJI PHOTO FILM CO LTD [JP]) 8 December 2004 (2004-12-08) * claims 1-6,8 * * examples 1-4 * * paragraphs [0014] - [0081], [0096] - [0127] * | 1-8 | |
| X | JP 61 057379 A (MITSUBISHI PAPER MILLS LTD) 24 March 1986 (1986-03-24) * abstract * | 1-4,6-8 | |
| Y | US 2002/176970 A1 (KOBAYASHI TAKASHI [JP] ET AL) 28 November 2002 (2002-11-28) * paragraphs [0047] - [0168] * * examples 1-3 * | 1-8 | TECHNICAL FIELDS SEARCHED (IPC) C09C |
| Y | JP 10 309862 A (DAICEL CHEM) 24 November 1998 (1998-11-24) * abstract * | 1-8 | |

The present search report has been drawn up for all claims

| Place of search | Date of completion of the search | Examiner |
|---|---|---|
| The Hague | 29 October 2009 | Marino, Emanuela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 2 130 876 A1

ANNEX TO THE EUROPEAN SEARCH REPORT
ON EUROPEAN PATENT APPLICATION NO.

EP 09 01 1987

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2009

| Patent document cited in search report | | Publication date | Patent family member(s) | | Publication date |
|---|---|---|---|---|---|
| US 2002094420 | A1 | 18-07-2002 | JP 2002160442 | A | 04-06-2002 |
| JP 6032046 | A | 08-02-1994 | JP 3097335 | B2 | 10-10-2000 |
| EP 1484189 | A2 | 08-12-2004 | JP 4303641 | B2 | 29-07-2009 |
| | | | JP 2005014593 | A | 20-01-2005 |
| | | | US 2005019506 | A1 | 27-01-2005 |
| JP 61057379 | A | 24-03-1986 | JP 1800724 | C | 12-11-1993 |
| | | | JP 4027952 | B | 13-05-1992 |
| US 2002176970 | A1 | 28-11-2002 | JP 4000246 | B2 | 31-10-2007 |
| | | | JP 2002307806 | A | 23-10-2002 |
| JP 10309862 | A | 24-11-1998 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10119423 A
- JP 10217601 A
- JP 10264511 A
- JP 2000043409 A
- JP 2000343811 A
- JP 2002120452 A
- JP 11020306 A
- US 3017280 A
- US 2983611 A
- US 3100704 A
- JP 47010537 A
- JP 58111942 A
- JP 58212844 A
- JP 59019945 A
- JP 59046646 A
- JP 59109055 A
- JP 63053544 A
- JP 3610466 B
- JP 4226187 B
- JP 48030492 B
- JP 48031255 B
- JP 48041572 B
- JP 48054965 B
- JP 50010726 B
- US 2719086 A
- US 3707375 A
- US 3754919 A
- US 4220711 A
- JP 454699 A
- JP 54005324 A
- EP 223739 A
- EP 309401 A
- EP 309402 A
- EP 310551 A
- EP 310552 A
- EP 459416 A
- DE 3435443
- JP 54048535 A
- JP 60107384 A
- JP 60107383 A
- JP 60125470 A
- JP 60125471 A
- JP 60125472 A
- JP 60287485 A
- JP 60287486 A
- JP 60287487 A
- JP 60287488 A
- JP 61160287 A
- JP 61185483 A
- JP 61211079 A
- JP 62146678 A
- JP 62146680 A
- JP 62146679 A
- JP 62282885 A
- JP 62262047 A
- JP 63051174 A
- JP 63089877 A
- JP 63088380 A
- JP 6688381 B
- JP 63113536 A
- JP 63163351 A
- JP 63203372 A
- JP 63224989 A
- JP 63251282 A
- JP 63267594 A
- JP 63182484 A
- JP 1239282 A
- JP 2026265 A
- JP 2071262 A
- JP 3121449 A
- JP 4291685 A
- JP 4291684 A
- JP 5061166 A
- JP 5119449 A
- JP 5188687 A
- JP 5188686 A
- JP 5110490 A
- JP 51108437 B
- JP 5170361 A
- JP 48043295 A
- JP 48033212 A
- US 4814262 A
- US 4980275 A
- US 3843368 A
- JP 59049535 A
- JP 63236546 A
- JP 5303205 A
- JP 8262742 A
- JP 10282619 A
- JP 62245258 A
- JP 621316648 B
- JP 62110066 A
- JP 4052786 B
- JP 5067432 B
- JP 7029479 B
- JP 2537827 B
- JP 7057553 B
- JP 2502998 B

- JP 3053231 B
- JP 63176173 A
- JP 2604367 B
- JP 7276787 A
- JP 9207425 A
- JP 11058941 A
- JP 2000135858 A
- JP 2001205924 A
- JP 2001287444 A
- JP 62278080 A
- JP 9039373 A
- JP 2750433 B
- JP 2000158801 A
- JP 2001213045 A
- JP 2001328345 A
- JP 8324105 A
- JP 11348417 A
- JP 2002307822 A
- JP 10182621 A
- JP 2001260519 A
- JP 4034953 B
- JP 4034513 B
- JP 11170686 A
- JP 4034512 B
- EP 1138509 A
- JP 60067190 A
- JP 7276808 A
- JP 2001094829 A
- JP 454699 B
- JP 54005324 B
- JP 3435443 A
- JP 6688381 A
- JP 2262654 A
- JP 51108437 A
- JP 48043295 B
- JP 48033212 B

**Non-patent literature cited in the description**

- Chemical Engineering Handbook. Maruzen, 25 October 1980, 707-712